(19) Europäisches Patentamt
European Patent Office
Office européen des brevets

(11) **EP 1 273 894 B1**

(12) **FASCICULE DE BREVET EUROPEEN**

(45) Date de publication et mention
de la délivrance du brevet:
**01.12.2004 Bulletin 2004/49**

(51) Int Cl.⁷: **G01J 3/46**

(21) Numéro de dépôt: **02291449.3**

(22) Date de dépôt: **11.06.2002**

(54) **Procédé pour l'obtention d'une gamme de couleurs**

Verfahren zur Erlangung einer Farbpalette

Method for obtaining a colour palette

(84) Etats contractants désignés:
**AT BE CH CY DE DK ES FI FR GB GR IE IT LI LU
MC NL PT SE TR**

(30) Priorité: **22.06.2001 FR 0108295**

(43) Date de publication de la demande:
**08.01.2003 Bulletin 2003/02**

(73) Titulaires:
• **ESSILOR INTERNATIONAL (Compagnie
Générale d'Optique)
F-94220 Charenton-le-Pont (FR)**
• **Museum National d'Histoire Naturelle
75005 Paris (FR)**

(72) Inventeurs:
• **Vienot, Françoise
75007 Paris (FR)**
• **Benhalima, Fatima
75012 Paris (FR)**
• **Brettel, Hans
75015 Paris (FR)**

(74) Mandataire: **Santarelli
14, avenue de la Grande Armée,
B.P. 237
75822 Paris Cedex 17 (FR)**

(56) Documents cités:
**EP-A- 0 800 096        US-A- 6 149 270**

**Description**

L'invention concerne un procédé pour l'obtention d'une gamme de couleurs, notamment pour la fabrication de verres ophtalmiques colorés.

On sait que les verres colorés servent parfois à corriger une vision des couleurs déficiente (voir par exemple US-A-6 149 270).

Le choix de tels verres colorés était autrefois dicté par le désir du porteur d'atténuer la luminosité perçue afin notamment de soulager sa rétine en cas de fort ensoleillement.

Répondant à un effet de mode, les porteurs se tournent aujourd'hui vers des verres ophtalmiques dont ils choisissent la couleur par simple goût et généralement indépendamment de leur capacité à atténuer la luminosité.

Aussi voit-on se multiplier sur les étals des opticiens des lunettes dites « de soleil », bien que cette appellation soit désormais impropre, dont les couleurs des verres sont de plus en plus variées : jaune, vert, bleu, rouge, etc.

Le port de verres ophtalmiques colorés entraîne une modification de l'apparence des couleurs perçues par le porteur, même si celui-ci s'adapte naturellement à la couleur de ses verres.

Aujourd'hui, la fabrication d'un verre ophtalmique coloré ne tient compte que de l'apparence finale intrinsèque de celui-ci, sans préoccupation pour l'effet que son port entraîne sur la modification de l'apparence des couleurs.

L'invention vise à pallier cette insuffisance en proposant un procédé pour obtenir une gamme de couleurs qui, appliquées notamment à la fabrication d'un verre ophtalmique coloré, tiennent compte de l'effet de celui-ci sur la modification de l'apparence des couleurs.

A cet effet, l'invention propose, selon un premier aspect, un procédé pour l'obtention d'une gamme de couleurs, comportant les étapes suivantes :

- sélection d'une couleur dite test parmi un éventail de couleurs prédéterminé ;
- sélection d'une palette test constituée d'une pluralité d'échantillons de couleurs ;
- mesure de la couleur, dite réelle, de chaque échantillon, ainsi que du blanc parfait s'il ne fait pas partie de la palette test, éclairé par une source de lumière blanche ;
- mesure de la couleur, dite apparente, de chaque échantillon, ainsi que du blanc parfait s'il ne fait pas partie de la palette test, éclairé par une source dite test, formée par ladite source de lumière blanche filtrée par ladite couleur test ;
- mesure, pour chaque échantillon, de la déviation colorimétrique entre ladite couleur réelle mesurée et ladite couleur apparente mesurée ;
- mesure, pour le blanc parfait s'il ne fait pas partie de la palette test, de la déviation colorimétrique entre ladite couleur réelle mesurée et ladite couleur apparente mesurée ;
- correction, pour chaque échantillon, de la déviation colorimétrique mesurée, par soustraction de la déviation colorimétrique mesurée pour le blanc parfait, afin de compenser l'adaptation chromatique ;
- mesure de l'écart chromatique donné par la déviation colorimétrique corrigée de chaque échantillon ;
- mesure de l'écart chromatique moyen pour l'ensemble des écarts chromatiques ;
- comparaison de la valeur de l'écart chromatique moyen à une valeur test ;
- ajout de la couleur test à la gamme si la valeur de l'écart chromatique moyen est inférieure ou égale à ladite valeur test.

Selon un mode de réalisation, la couleur test est ajoutée à la gamme si, et seulement si l'écart chromatique moyen est inférieur ou égal à ladite valeur test.

Selon un autre mode de réalisation, le procédé comporte les étapes suivantes si au moins l'un des écarts chromatiques est strictement supérieur à ladite valeur test :

- mesure de la distribution angulaire des déviations colorimétriques, c'est-à-dire l'ensemble des angles de déviation donnés chacun par la déviation colorimétrique corrigée d'un échantillon respectif ;
- ajout de la couleur test à la gamme si ladite distribution angulaire est uniforme.

Ledit éventail est par exemple constitué par l'atlas de Munsell, tandis que ladite palette test est par exemple constituée par une pluralité d'échantillons de couleurs choisies parmi ce même atlas ou par une pluralité d'échantillons dont les couleurs sont sélectionnées comme étant les plus représentatives de l'atlas de Munsell selon une compression effectuée par une méthode prédéterminée telle qu'une réduction par analyse en composantes principales.

La mesure de la couleur apparente et de la couleur réelle consiste notamment à calculer leurs coordonnées dans un espace chromatique prédéterminé, tel que l'espace CIELAB.

Selon un deuxième aspect, l'invention propose un procédé pour l'obtention d'un verre ophtalmique de couleur, qui comporte une étape d'obtention d'une gamme de couleurs par le procédé tel qu'exposé ci-dessus, constituée par un ensemble de couleurs dont le nombre est strictement supérieur à deux, et une étape de sélection d'une couleur parmi la gamme ainsi obtenue.

D'autres caractéristiques et avantages de l'invention apparaîtront à la lumière de la description qui va suivre d'un mode de réalisation donné à titre d'exemple non limitatif, description faite en référence aux dessins annexés dans lesquels :

- la figure 1 est une vue schématique sur laquelle est représentée une palette constituée d'une pluralité d'échantillons de couleurs, éclairée par une source blanche, et regardée par un observateur ;
- la figure 2 est une vue schématique sur laquelle est représenté l'un des échantillons de la palette de la figure 1, éclairé par la même source blanche ; entre l'observateur et la palette est interposé un verre de couleur ;
- la figure 3 est une vue similaire à la figure 1, où le verre de couleur de la figure 2 est interposé entre la palette et l'observateur ;
- la figure 4 est une vue similaire à la figure 3, où le verre est interposé entre la source blanche et la palette ;
- la figure 5 est un graphique représentant la distribution spectrale d'énergie de l'illuminant $D_{65}$ ;
- la figure 6 est un graphique représentant le facteur de transmission d'un verre coloré de teinte bleutée en fonction de la longueur d'onde de la lumière incidente ;
- la figure 7 est une représentation schématique cylindrique de l'espace de Munsell ;
- la figure 8 est un graphique représentant le facteur de réflexion de six échantillons de couleurs en fonction de la longueur d'onde de la lumière incidente suivant laquelle ils sont éclairés ;
- la figure 9 est un graphique représentant le facteur de réflexion de trois échantillons de couleurs en fonction de la longueur d'onde de la lumière incidente suivant laquelle ils sont éclairés ;
- la figure 10 est une représentation d'un espace chromatique a* b* plan sur lequel sont repérées, sous la forme de cercles, les couleurs, dites réelles, des six échantillons de la figure 8, éclairés par une source blanche et, sous la forme de croix, les couleurs, dites apparentes, de ces six échantillons éclairés par une source test formée par la source blanche filtrée ; sont également représentés dans cet espace chromatique, les vecteurs déviation colorimétrique reliant, pour chaque couleur, le cercle et la croix y relatifs ;
- la figure 11 est une représentation d'un espace chromatique a* b* plan sur lequel sont repérées, sous la forme de cercles, les couleurs, dites réelles, de 127 échantillons, éclairés par une source blanche et, sous la forme de croix, les couleurs, dites apparentes, de ces 127 échantillons éclairés par une source test formée par la source blanche filtrée ;
- la figure 12 est un diagramme illustrant certaines étapes du procédé selon l'invention ;
- les figures 13, 14 et 15 sont des graphiques représentant les distributions spectrales des facteurs de transmission de trois verres colorés.

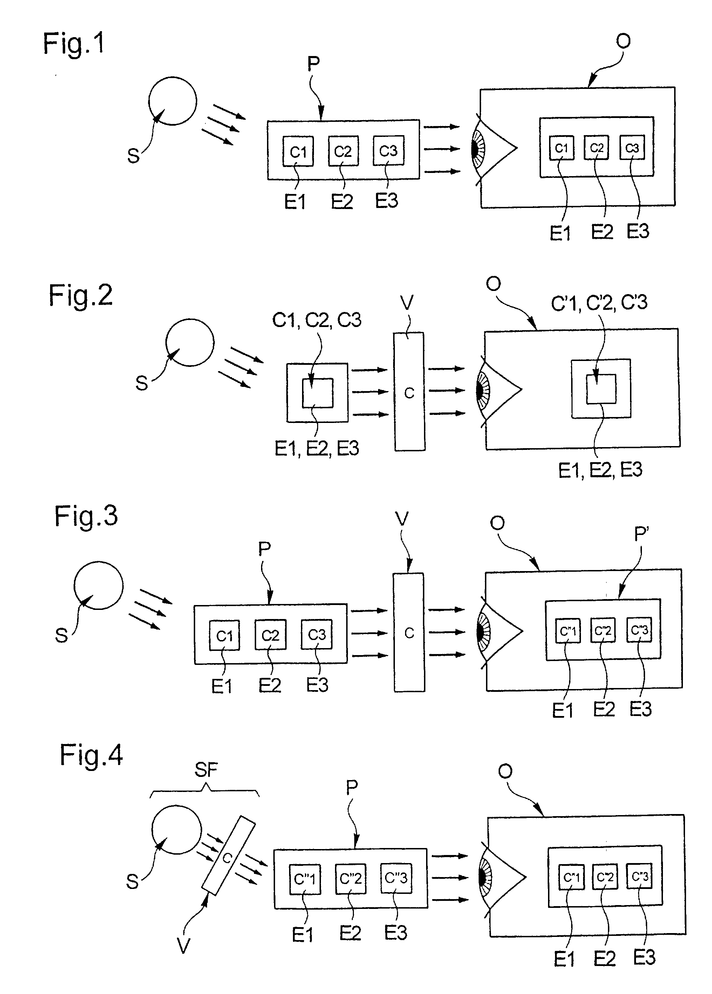

Sur la figure 1 est représentée une palette P composée d'une pluralité d'échantillons E1, E2, E3 de couleurs réelles respectives C1, C2, C3 différentes.

La palette P étant éclairée par une source de lumière blanche S supposée idéale, c'est-à-dire analogue à une lumière naturelle du jour, par exemple par grand soleil ou par ciel couvert, au nord, un observateur O supposé également idéal, c'est-à-dire sans défaut de chromatisme ou d'amétropie, qui regarde la palette P, s'en fait une représentation, appelée palette perçue, dont les échantillons présentent des couleurs respectives identiques aux couleurs réelles C1, C2, C3 des échantillons E1, E2, E3.

Sous l'effet de l'interposition d'un verre ophtalmique V coloré, dont on note C la couleur, entre l'observateur O et l'un quelconque seulement des échantillons E1, E2 ou E3 de la palette P, cet échantillon présente pour l'observateur O une couleur C'1, C'2, C'3 différente de sa couleur réelle (figure 2).

Par contre, sous l'effet de l'interposition du même verre ophtalmique V coloré entre l'observateur O et l'ensemble de la palette P (figure 3), chaque échantillon présente pour l'observateur une couleur C"1, C"2, C"3 qui est non seulement différente de sa couleur réelle, mais également de la couleur perçue C'1, C'2, C'3 lors de l'interposition du verre V devant ce seul échantillon E1, E2, E3.

Ainsi, pour l'observateur O, la distorsion des couleurs causée par le verre V pour chaque échantillon E1, E2, E3 varie en fonction de la surface visuelle couverte par le verre V. Ceci s'explique par les facultés d'adaptation chromatiques du système visuel de l'observateur O, comparable à une balance des blancs. Le passage des couleurs réelles C1, C2, C3 aux couleurs perçues C"1, C"2, C"3 sous l'effet de l'interposition du verre de couleur est appelé déviation colorimétrique.

Aujourd'hui, lors du choix de verres ophtalmiques colorés, la déviation colorimétrique est laissée à l'appréciation du porteur - appréciation subjective, donc - alors que certaines couleurs de verre peuvent provoquer une déviation colorimétrique objectivement inacceptable, s'agissant notamment de la perception de couleurs répondant à un code ou à une norme, par exemple en matière de signalisation de sécurité.

L'on souhaite établir une gamme de couleurs utilisables pour la fabrication de verres ophtalmiques, dont l'effet sur la déviation colorimétrique, lorsque ces couleurs sont employées pour filtrer une source de lumière blanche prédéfinie, soit acceptable selon des critères objectifs qui apparaîtront dans ce qui va suivre.

On observe au préalable que, pour l'observateur, l'interposition du verre entre la source et la palette ou entre la palette et l'observateur est indifférente.

Par conséquent, l'interposition du verre V entre la palette P et l'observateur O a le même effet que l'éclairage de la palette P par une source colorée SF formée par la source blanche S filtrée par le verre V coloré (figure 4). Cette source filtrée est appelée source test par la suite.

A condition de tenir compte des facultés d'adaptation chromatique du système visuel, il est donc possible d'établir ladite gamme suivant un procédé ne nécessitant l'intervention d'aucun observateur.

Une première étape consiste à choisir la source test, c'est-à-dire, d'une part, la source blanche et, d'autre part, la couleur employée pour la filtrer, qui est appelée couleur test dans ce qui suit.

La source blanche est choisie parmi les sources blanches idéales. Selon un mode préféré de réalisation, cette source blanche est l'illuminant $D_{65}$ qui, défini par la Commission Internationale de l'Eclairage et bien connu de l'homme du métier, présente une température de couleur égale à environ 6500 Kelvin.

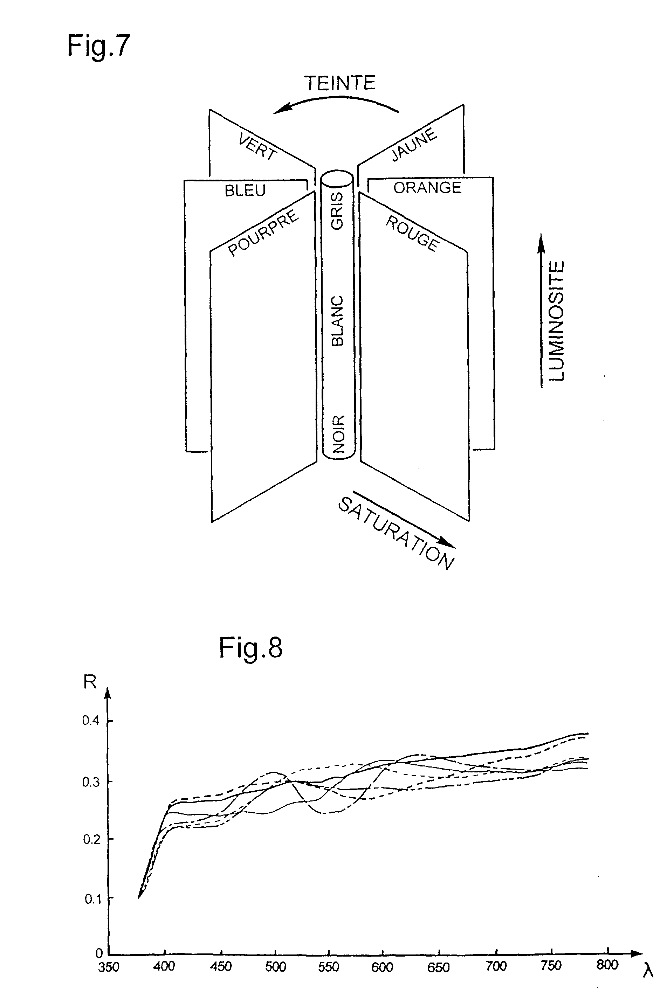

La couleur test est, quant à elle, choisie parmi un éventail de couleurs prédéterminé, représentatif, de préférence, de l'ensemble des couleurs du spectre visible. Selon un mode de réalisation, cet éventail est l'atlas de couleurs de Munsell qui, on le rappelle, se présente sous la forme d'un réseau cylindrique dans lequel les couleurs sont classées selon les trois critères suivants : teinte (en anglais : hue), luminosité (en anglais : value) et saturation (en anglais : chroma). Une représentation schématique cylindrique de l'atlas de Munsell, qui est connu de l'homme du métier, est fournie sur la figure 7.

On rappelle que cet atlas comporte plus de mille - en l'occurrence 1269 - échantillons de couleurs.

Chaque échantillon et, par conséquent, chaque couleur de l'atlas de Munsell peut être caractérisé(e) par la distribution spectrale de son facteur de transmission, c'est-à-dire la distribution spectrale du facteur de transmission d'un verre coloré par cette couleur. Cette distribution est constituée de l'ensemble des facteurs de transmission du verre coloré, pour une gamme de longueurs d'onde comprises entre 350 nm et 750 nm, ce qui correspond à peu près au spectre visible par l'oeil humain (on rappelle que 1 nm = $10^{-9}$ m).

On rappelle que le facteur de transmission d'un objet donné (en l'occurrence, le verre) éclairé par un flux lumineux incident est une grandeur sans dimension, comprise entre 0 et 1 ou, si elle est exprimée en pourcentage, entre 0 et 100, égale au rapport du flux lumineux transmis au flux lumineux incident (éventuellement multiplié par un facteur 100 pour une expression en pourcentage).

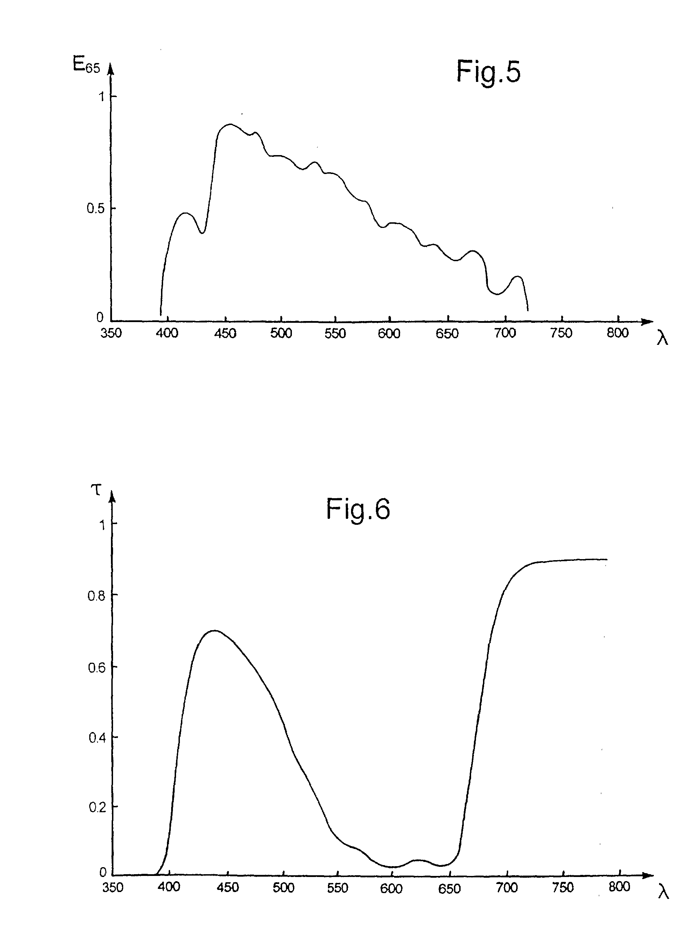

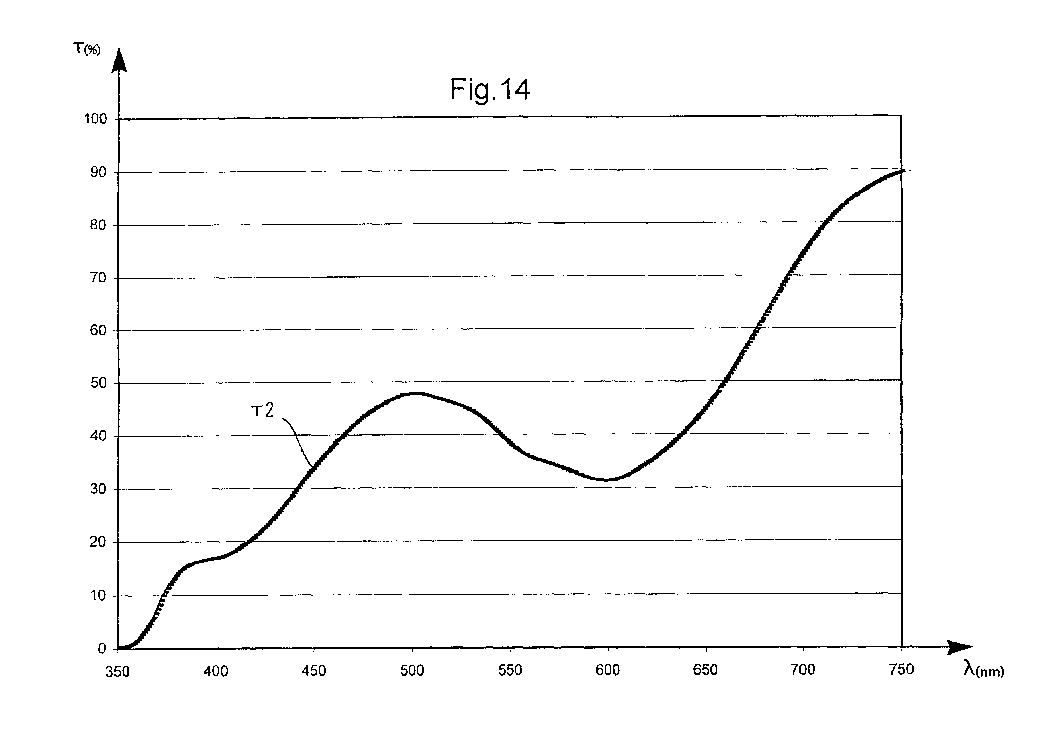

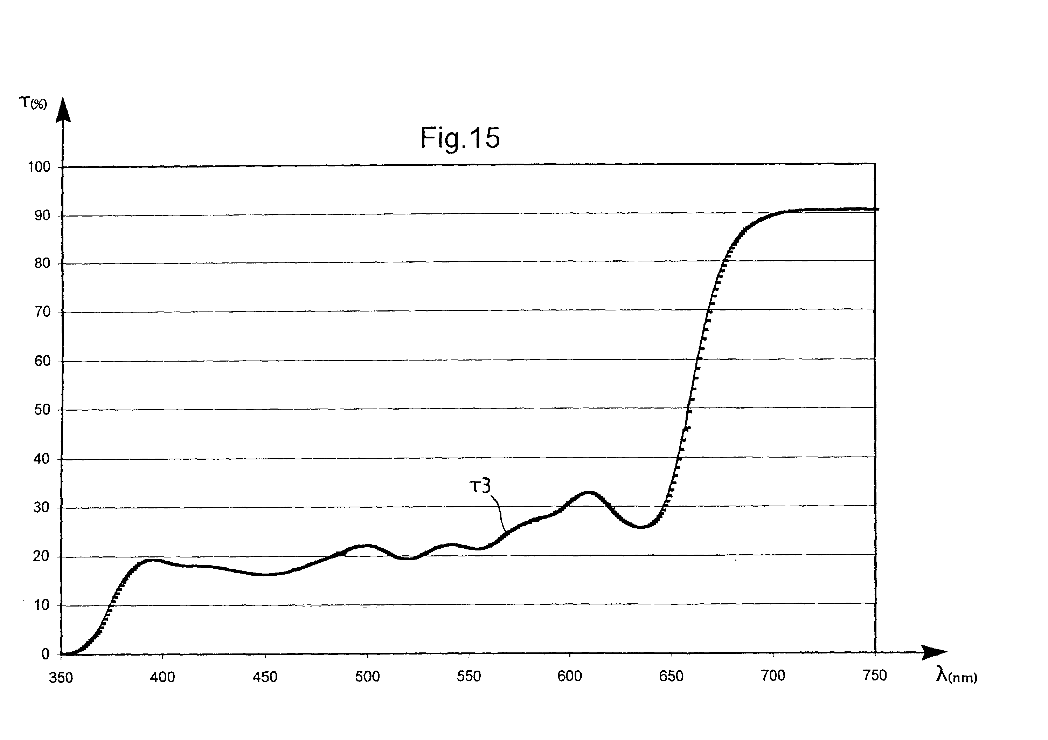

Ainsi, pour un pas de 1 nm, chaque échantillon, et par conséquent la couleur correspondante, peut être caractérisé par un ensemble de 401 facteurs de réflexion. Pour chaque couleur, il est donc possible à partir de cet ensemble, de construire une courbe représentant la distribution spectrale de son facteur de réflexion, tel qu'illustré sur les figures 6, 13, 14 et 15, pour des couleurs de teintes respectives bleue, grise, vert et brun.

A partir de la source blanche et de la couleur test choisie, il est alors possible de caractériser la source test : à partir de la distribution spectrale d'énergie $E_{65}(\lambda)$ de la source blanche (en l'occurrence l'illuminant $D_{65}$, voir figure 5) et du facteur de transmission spectral $\tau(\lambda)$ de la couleur test, l'on détermine la distribution spectrale d'énergie $E_K(\lambda)$ de la source test, cette énergie étant égale au produit de l'énergie $E_{65}(\lambda)$ de la source blanche par le facteur de transmission $\tau(\lambda)$ associé à la couleur test :

$$E_K(\lambda) = \tau(\lambda)E_{65}(\lambda)$$

Une étape suivante consiste à mesurer par calcul, en tenant compte de l'adaptation chromatique, la déviation colorimétrique causée par la source test sur une palette appelée palette test par la suite, constituée d'une pluralité d'échantillons de couleurs, qui soit suffisamment représentative de l'ensemble du spectre visible, afin de modéliser les situations visuelles auxquelles est susceptible d'être confronté quotidiennement un observateur.

La constitution de la palette test peut être effectuée à partir de l'atlas de Munsell, qui répond à cette exigence.

L'on a vu ci-dessus que chaque échantillon et, par conséquent, chaque couleur de l'atlas de Munsell peut être caractérisé(e) par la distribution spectrale de son facteur de transmission.

Chaque échantillon, respectivement chaque couleur, peut également être caractérisé(e) par la distribution spectrale de son facteur de réflexion. Cette distribution est constituée de l'ensemble des facteurs de réflexion de l'échantillon pour une gamme de longueurs d'onde comprises par exemple entre 350 nm et 750 nm, ce qui correspond à peu près au spectre visible par l'oeil humain (on rappelle que 1 nm = $10^{-9}$ m).

On rappelle que le facteur de réflexion d'un échantillon donné éclairé par un flux lumineux incident est une grandeur sans dimension, comprise entre 0 et 1 ou, si elle est exprimée en pourcentage, entre 0 et 100, et égale au rapport du flux lumineux réfléchi au flux lumineux incident (éventuellement multiplié par un facteur 100 pour une expression en pourcentage).

Le nombre de facteurs de réflexion caractéristiques de chaque échantillon dépend du pas choisi séparant deux longueurs d'onde adjacentes dans la gamme de longueurs d'onde.

Ainsi, pour un pas de 5 nm, chaque échantillon est caractérisé par un ensemble de 81 facteurs de réflexion.

Pour un pas de longueurs d'onde de 5nm, l'atlas de Munsell peut donc être représenté algébriquement par une matrice X dite matrice de Munsell, comprenant 1269 lignes et 81 colonnes, chaque ligne correspondant à un échantillon et contenant l'ensemble des facteurs de réflexion de celui-ci pour la gamme choisie.

Ces facteurs de réflexion peuvent être directement mesurés par spectrophotométrie, toutefois l'homme du métier pourra obtenir leurs valeurs auprès du Computer Science and Physics Department de l'Université de Joensuu, Finlande.

Bien entendu, l'espace de Munsell pourrait lui-même constituer la palette test. Toutefois, compte tenu de la taille de la matrice X de Munsell, cela implique des calculs très longs nécessitant des moyens informatiques ou électroniques très coûteux.

Il est donc préférable d'employer une palette test de taille réduite. L'on note N le nombre d'échantillons de la palette test, chaque échantillon et sa couleur correspondante étant repérés simultanément par un indice entier i compris entre 1 et N.

Ainsi, selon un premier mode de réalisation, la palette test est constituée de 127 échantillons (N = 127) extraits de l'atlas de Munsell, par une sélection d'un échantillon sur dix. Bien entendu, en fonction de la puissance de calcul dont on dispose, il serait possible d'en sélectionner par exemple un sur cinq ou, inversement, un sur vingt.

Selon un deuxième mode de réalisation, il est prévu de constituer la palette test par compression de l'atlas de Munsell afin d'en extraire les tendances colorées les plus significatives.

Cette compression est effectuée par réduction de la matrice X de Munsell au moyen de la méthode dite de l'analyse en composantes principales (ACP).

La méthode ACP comprend les étapes consistant :

- à calculer une matrice C, dite de corrélation, égale au produit de la transposée $^t$X de la matrice X de calcul par cette dernière :

$$C = {}^tXX \; ;$$

- à calculer les valeurs et vecteurs propres de la matrice C de corrélation qui, par définition, est symétrique ;

Chaque vecteur propre, qui se présente sous la forme d'une colonne de 81 composantes correspondant chacune à une longueur d'onde, est représentatif d'une couleur dite propre.

L'on peut constituer la palette test par un ensemble de 81 échantillons (N=81) dont la couleur de chacun est, respectivement, chacune des couleurs propres.

La valeur propre associée à chacune des couleurs propres correspond à son inertie, c'est-à-dire la représentativité de la couleur propre par rapport à l'ensemble des couleurs de l'atlas de Munsell.

Pour chaque couleur propre i, le poids $W_i$ de sa valeur propre $\alpha_i$ est fourni par la formule suivante :

$$W_i = \frac{\alpha_i}{\displaystyle\sum_{i=1}^{N} \alpha_i}$$

L'on peut également constituer la palette test par un sous-ensemble d'échantillons dont les couleurs sont choisies parmi les couleurs propres de poids supérieur.

A cet effet, il est procédé au classement des vecteurs propres par ordre décroissant de leurs valeurs propres respectives, c'est-à-dire depuis le vecteur propre ayant la valeur propre la plus élevée jusqu'au vecteur propre ayant la valeur propre la moins élevée.

L'on constate que les six premiers vecteurs propres présentent ensemble environ 80 % de l'inertie totale de l'ensemble des vecteurs propres, et que par conséquent les six premiers vecteurs propres fournissent une représentation acceptable des tendances colorées de l'atlas de Munsell.

On sélectionne donc les six premiers vecteurs propres, c'est-à-dire les six vecteurs propres ayant les valeurs propres les plus élevées (N = 6).

La palette test est ainsi constituée des six couleurs dont les poids sont les plus élevés ; elle peut être représentée, algébriquement, par une matrice constituée par la juxtaposition des six vecteurs propres associés.

Le graphique de la figure 8 représente ces six premiers vecteurs propres, sous la forme de courbes du type R = f (λ) où R est le facteur de réflexion et λ la longueur d'onde.

Tel qu'il ressort de cette figure, les couleurs propres correspondant aux six premiers vecteurs propres sont des couleurs pastel.

Il est à noter que pour chaque longueur d'onde λ, il est possible de restituer une approximation du facteur de réflexion de chaque échantillon de l'atlas de Munsell à partir des 6 premiers vecteurs propres, d'après la formule suivante :

$$R(\lambda) = \sum_{i=1}^{i=N} \sqrt{\alpha_i} \, W_i(\alpha_i) V_i(\lambda) \qquad\qquad (1)$$

où λ est la longueur d'onde concernée, $V_i(\lambda)$ la composante du $i^{\text{ème}}$ vecteur propre pour la longueur d'onde λ, $\alpha_i$ la valeur propre associée et $W_i$ le poids de celle-ci.

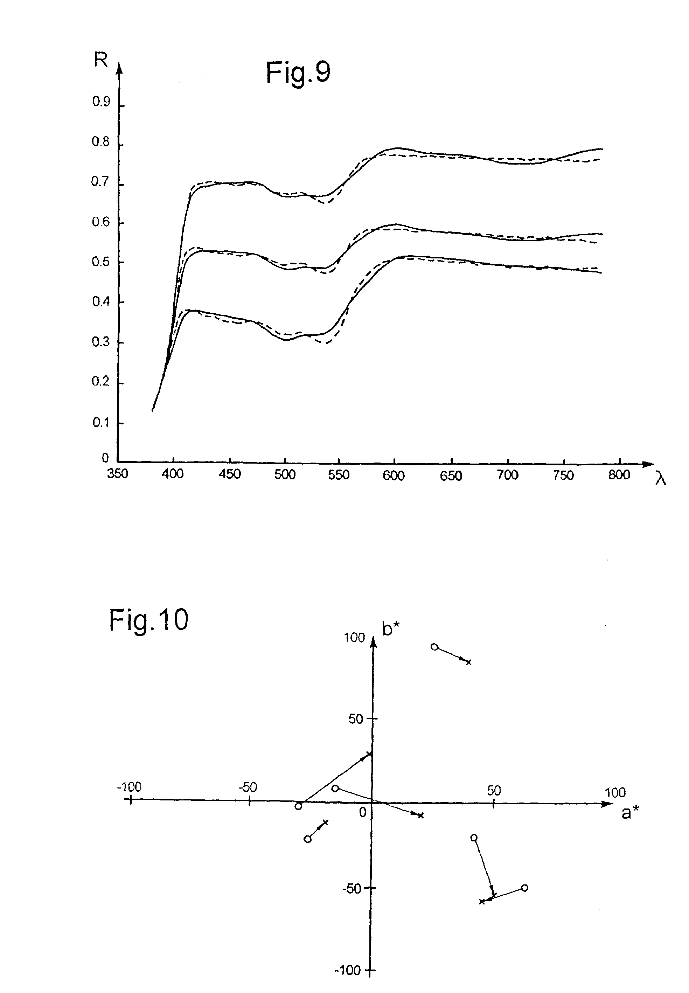

Le graphique de la figure 9 représente, en traits pleins ainsi qu'en traits interrompus, les courbes des facteurs de réflexion de trois échantillons de couleurs de l'atlas de Munsell en fonction de la longueur d'onde de la lumière incidente, ces facteurs étant restitués au moyen de la formule (1) précédente avec, respectivement, N=6 et N=81, d'où il ressort que les facteurs de réflexion correspondant à N=6 sont une approximation acceptable des facteurs de réflexion correspondant à N=81.

Une fois constituée la palette test, il est procédé à la mesure de la couleur réelle de chacun de ses échantillons, c'est-à-dire la couleur de l'échantillon éclairé par une source de lumière blanche, en l'occurrence l'illuminant $D_{65}$, puis à la mesure de sa couleur apparente, c'est-à-dire sa couleur lorsqu'il est éclairé par la source test.

Selon un mode préféré de réalisation, ces mesures sont effectuées au moins en partie à l'aide de la méthode dite CRI-96, proposée par la Commission Internationale de l'Eclairage.

Les calculs effectués pour la mesure de la couleur apparente d'un échantillon i donné, comprennent les étapes suivantes :

a) Calcul, dans l'espace CIEXYZ, défini par la Commission Internationale de l'Eclairage, des coordonnées trichromatiques $(X_k, Y_k, Z_k)$ de la source test, à partir de sa répartition spectrale relative d'énergie $E_k(\lambda)$ définie plus haut ;

b) Calcul, dans l'espace CIEXYZ, des coordonnées trichromatiques de la source blanche qui est choisie de sorte que sa chromaticité soit la plus proche possible de la chromaticité de la source test, ici, on le rappelle, il s'agit de l'illuminant $D_{65}$ ;

c) Calcul, dans l'espace CIEXYZ, des coordonnées trichromatiques $(X_i, Y_i, Z_i)$ de la couleur i sous l'éclairage de la source test ;

d) Passage des coordonnées trichromatiques $X_i$, $Y_i$, $Z_i$ du système CIEXYZ aux coordonnées spectrales $R_i$, $G_i$, $B_i$ du système RGB défini par la Commission Internationale de l'Eclairage, par les formules suivantes :

$$R_i = 0{,}40024 X_i + 0{,}70760 Y_i - 0{,}08081 Z_i$$

$$G_i = -0{,}22630 X_i + 1{,}16532 Y_i + 0{,}04570 Z_i$$

$$B_i = 0{,}91822 Z_i$$

e) Transformation de la source test en une source dite de référence et calcul, pour la couleur éclairée par cette source de référence, de ses coordonnées spectrales $R_{Di}$, $G_{Di}$, $B_{Di}$ dans le système RVB (en anglais : RGB) :

$$R_{Di} = \left(20\xi_D + 1\right) \left[\frac{R_i + 1}{20\xi + 1}\right]^{\frac{\beta_1(R_0)}{\beta_1(R_{0D})}} - 1$$

$$G_{Di} = \left(20\eta_D + 1\right)\left[\frac{G_i + 1}{20\eta + 1}\right]^{\frac{\beta_1(G_0)}{\beta_1(G_{0D})}} - 1$$

$$B_{Di} = \left(20\zeta_D + 1\right)\left[\frac{B_i + 1}{20\zeta + 1}\right]^{\frac{\beta_2(B_0)}{\beta_2(B_{0D})}} - 1$$

où :

$$\xi = \frac{0{,}48105 X_k + 0{,}78841 Y_k - 0{,}08081}{Y_k}$$

$$\eta = \frac{-0{,}27200\, X_k + 1{,}11962 Y_k + 0{,}04570}{Y_k}$$

$$\zeta = 0{,}91822\, \frac{1 - X_k - Y_k}{Y_k}$$

et

$$\xi_D = \frac{0{,}48105 X_D + 0{,}78841 Y_D - 0{,}08081}{Y_D}$$

$$\eta_D = \frac{-0{,}27200 X_D + 1{,}11962 Y_D + 0{,}04570}{Y_D}$$

$$\zeta_D = 0{,}91822\, \frac{1 - X_D - Y_D}{Y_D}$$

$X_D$, $Y_D$ sont les coordonnées trichromatiques de la source de référence. Ici, cette source de référence est choisie identique à l'illuminant $D_{65}$, pour lequel $\xi_D = \eta_D = \zeta_D = 1$.

$R_0$, $G_0$, $B_0$ et $R_{0D}$, $G_{0D}$, $B_{0D}$ sont les coordonnées dans le système RVB de la source test et de l'illuminant $D_{65}$, caractéristiques de l'adaptation chromatique :

$$\begin{vmatrix} R_0 \\ G_0 \\ B_0 \end{vmatrix} = 0{,}2\frac{E_0}{\pi}\begin{vmatrix} \xi \\ \eta \\ \zeta \end{vmatrix} \qquad \text{et} \qquad \begin{vmatrix} R_{0D} \\ G_{0D} \\ B_{0D} \end{vmatrix} = 0{,}2\frac{E_0}{\pi}\begin{vmatrix} \xi_D \\ \eta_D \\ \zeta_D \end{vmatrix}$$

où $E_0$ et $E_{0D}$ sont les luminances respectives des sources test et de l'illuminant $D_{65}$, telles que $E_0 = E_{0D} = 1000$ lux, et où le facteur 0,2 est le facteur de luminance du gris.

Les fonctions $\beta$ sont quant à elles définies par les équations suivantes :

$$\beta_1(R_0) = \frac{6,469 + 6,362R_0^{0,4495}}{6,469 + R_0^{0,4495}}$$

$$\beta_1(G_0) = \frac{6,469 + 6,362G_0^{0,4495}}{6,469 + G_0^{0,4495}}$$

$$\beta_2(B_0) = \frac{8,414 + 8,0911B_0^{0,5128}}{8,414 + B_0^{0,5128}}$$

$$\beta_1(R_{0D}) = \beta_1(G_{0D}) = 3,6810$$

$$\beta_2(B_{0D}) = 3,5656$$

f) Passage des coordonnées spectrales $R_{Di}$, $G_{Di}$, $B_{Di}$ du système RVB aux coordonnées trichromatiques $X_{Di}$, $Y_{Di}$, $Z_{Di}$, au moyen des formules suivantes :

$$X_{Di} = 1,85995R_{Di} - 1,12939G_{Di} + 0,21990B_{Di}$$

$$Y_{Di} = 0,36119R_{Di} + 0,63881G^2_{Di}$$

$$Z_{Di} = 1,08906B_{Di}$$

g) Passage des coordonnées trichromatiques $X_{Di}$, $Y_{Di}$, $Z_{Di}$ aux coordonnées $L_{ki}^*$, $a_{ki}^*$, $b_{ki}^*$ dans l'espace CIELAB défini par la Commission Internationale de l'Eclairage, par les formules suivantes :

$$L_{ki}^{\cdot} = 116\left(\frac{Y_{Di}}{Y_n}\right)^{\frac{1}{3}} - 16 \qquad \text{si} \frac{Y_{Di}}{Y_n} > 0,008856$$

$$L_{ki}^{\cdot} = 903,3\left(\frac{Y_{Di}}{Y_n}\right) \qquad \text{si} \frac{Y_{Di}}{Y_n} \leq 0,008856$$

$$a_{ki}^{\cdot} = 500\left[f\left(\frac{X_{Di}}{X_n}\right) - f\left(\frac{Y_{Di}}{Y_n}\right)\right]$$

$$b_{ki}^{\cdot} = 200\left[f\left(\frac{Y_{Di}}{Y_n}\right) - f\left(\frac{Z_{Di}}{Z_n}\right)\right]$$

où les fonctions f sont définies comme suit :

$$f\left(\frac{X}{X_n}\right) = \left(\frac{X}{X_n}\right)^{\frac{1}{3}} \qquad \text{si} \qquad \frac{X}{X_n} > 0,008856$$

$$f\left(\frac{X}{X_n}\right) = 7,787\left(\frac{X}{X_n}\right) + \frac{16}{116} \qquad \text{si} \qquad \frac{X}{X_n} \leq 0,008856$$

$$f\left(\frac{Y}{Y_n}\right) = \left(\frac{Y}{Y_n}\right)^{\frac{1}{3}} \qquad \text{si} \qquad \frac{Y}{Y_n} > 0,008856$$

$$f\left(\frac{Y}{Y_n}\right) = 7,787\left(\frac{Y}{Y_n}\right) + \frac{16}{116} \quad \text{si} \qquad \frac{Y}{Y_n} \leq 0,008856$$

$$f\left(\frac{Z}{Z_n}\right) = \left(\frac{Z}{Z_n}\right)^{\frac{1}{3}} \qquad \text{si} \qquad \frac{Z}{Z_n} > 0,008856$$

$$f\left(\frac{Z}{Z_n}\right) = 7,787\left(\frac{Z}{Z_n}\right) + \frac{16}{116} \qquad \text{si} \qquad \frac{Z}{Z_n} \leq 0,008856$$

$X_n$, $Y_n$, $Z_n$ sont les coordonnées trichromatiques de la couleur blanc sous l'illuminant $D_{65}$.

Les calculs des étapes c) à g) sont effectuées pour chaque échantillon de la palette test, ainsi que pour le blanc parfait s'il ne figure pas parmi la palette test.

L'espace CIELAB présente l'avantage d'être uniforme pour la vision humaine. L'axe L* représente la luminosité, de 0 pour le noir à 100 pour le blanc parfait, tandis que les axes a* et b* représentent la chromaticité, respectivement pour les couples antagonistes vert (a* = - 100) - rouge (a* = + 100) et bleu (b* = - 100) - jaune (b* = 100).

Les calculs ci-dessus sont effectués également pour la mesure de la couleur réelle des échantillons, les étapes c) à g) étant répétées pour chaque échantillon de la palette test et pour le blanc parfait, éclairé chacun par la source idéale (à savoir l'illuminant $D_{65}$). Les coordonnées des couleurs des échantillons de la palette test dans l'espace CIELAB sous source blanche sont notées $L^*_{id,i}$, $a^*_{id,i}$, $b^*_{id,i}$.

Il est alors possible d'obtenir, dans le système CIELAB et pour chacune des couleurs i, un vecteur dit déviation, caractéristique de la déviation colorimétrique (figure 8) et ayant pour coordonnées :

$$L^*_{vi} = L^*_{ki} - L^*_{id,i}$$

$$a^*_{vi} = a^*_{ki} - a^*_{id,i}$$

$$b^*_{vi} = b^*_{ki} - b^*_{id,i}$$

Il est alors procédé à une correction du vecteur déviation pour compenser l'adaptation chromatique, par soustraction, au vecteur déviation de chaque échantillon de la palette test, du vecteur déviation du blanc parfait.

L'on obtient ainsi pour chaque échantillon de la palette test un vecteur déviation corrigé de coordonnées $L^*_{ci}$, $a^*_{ci}$, $b^*_{ci}$ dans l'espace CIELAB, telles que :

$$L^*_{ci} = L^*_{vi} - L^*_{vblanc}$$

$$a^*_{ci} = a^*_{vi} - a^*_{vblanc}$$

$$b^*_{vi} = b^*_{vi} - b^*_{vblanc}$$

où $L^*_{vblanc} = a^*_{vblanc}$, $b^*_{vblanc}$ sont les coordonnées dans l'espace CIELAB du vecteur déviation du blanc parfait.

Les coordonnées du vecteur déviation corrigé constituent ainsi une mesure, pour chaque échantillon i de la palette test, de la déviation colorimétrique causée par la source test en tenant compte de l'adaptation chromatique.

L'écart chromatique $\Delta E^*_{ab,i}$ pour chaque échantillon i est égal au module du vecteur déviation corrigé :

$$\Delta E^*_{ab,i} = \sqrt{L^{*\,2}_{ci} + a^{*\,2}_{ci} + b^{*\,2}_{ci}}$$

Suivant une variante de réalisation, il n'est pas tenu compte des variations de luminosité, mais uniquement de chromaticité, de sorte que l'écart chromatique est défini par le module de la projection du vecteur déviation corrigé dans l'espace a* b* :

$$\Delta E^*_{ab,i} = \sqrt{a^{*\,2}_{ci} + b^{*\,2}_{ci}}$$

L'on calcule alors l'écart chromatique moyen $\Delta E^*_m$, égal à la moyenne arithmétique de l'ensemble des écarts chromatiques $\Delta E^*_{ab,i}$ :

$$\Delta E^*_m = \frac{1}{N} \sum_{i=1}^{N} \Delta E^*_{ab,i}$$

La valeur de l'écart chromatique moyen $\Delta E^*_m$ est alors comparée à une valeur test $\Delta E_o$ prédéterminée, qui constitue un premier critère pour l'acceptation de la couleur test parmi la gamme.

Ainsi, lorsque la valeur de l'écart chromatique global $\Delta E^*_m$ est inférieure ou égale à la valeur test $\Delta E_o$, la couleur test est acceptée, c'est-à-dire ajoutée à la gamme.

Selon un mode de réalisation, la valeur test $\Delta E_o$ est choisie égale à 10. De préférence, elle est choisie égale à 5.

Lorsque la valeur de l'écart chromatique global $\Delta E^*_m$ dépasse la valeur test $\Delta E_o$, alors la couleur test est refusée, c'est-à-dire exclue de la gamme.

En variante, la couleur test n'est pas refusée dès ce stade. Par contre, on procède à une mesure de la distribution angulaire de la déviation colorimétrique dans l'espace a* b*.

A cet effet, on mesure pour chaque échantillon i un angle dit de déviation, formé par la projection dans l'espace a* b* du vecteur déviation corrigé avec l'axe a* ou l'axe b*. La valeur de cet angle, noté $\theta_{vi}$, est fournie pour l'axe a* par la formule suivante :

$$\theta_{vi} = \text{Arctan}\ \frac{b^*_{ci}}{a^*_{ci}}$$

et, pour l'axe b*, par la formule suivante :

$$\theta_{vi} = \text{Arctan } \frac{a^*_{ci}}{b^*_{ci}}$$

On calcule alors la moyenne arithmétique de la distribution angulaire, c'est-à-dire de l'ensemble des angles de déviation, puis l'écart type de la distribution angulaire, cet écart type fournissant la mesure, évoquée ci-dessus, de la distribution angulaire. Lorsque cette distribution angulaire est uniforme, la couleur test est acceptée. Sinon, elle est refusée.

Suivant un mode de réalisation, la distribution angulaire est décrétée uniforme lorsque son écart type est inférieur à 60°, de préférence inférieur à 55°.

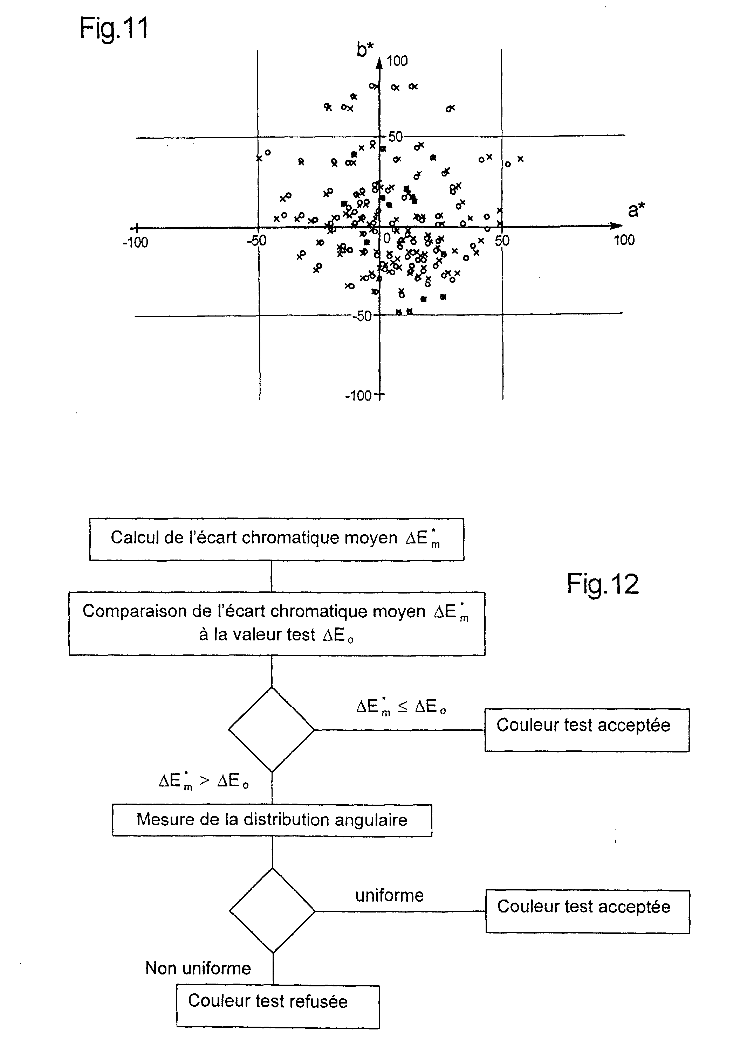

La figure 11 représente l'espace a* b* dans lequel sont reportées, sous forme de cercles, les coordonnées des 127 couleurs de la palette test précédemment définie suivant le premier mode de réalisation, sous l'éclairage de l'illuminant $D_{65}$ et, sous forme de croix, leurs coordonnées sous l'éclairage de la source test formée par l'illuminant $D_{65}$ supposé filtré par un verre dont la couleur est caractérisée par la distribution spectrale d'énergie représentée sur la figure 6, en tenant compte de l'adaptation chromatique.

La figure 10 représente l'espace a* b* dans lequel sont reportées, sous forme de cercles, les coordonnées des six couleurs propres de la palette test précédemment définie suivant le deuxième mode de réalisation, sous l'éclairage de l'illuminant $D_{65}$ et, sous forme de croix, leurs coordonnées sous l'éclairage de la source test formée par l'illuminant $D_{65}$ supposé filtré par le même verre que ci-dessus en tenant compte de l'adaptation chromatique.

Sont également représentés sur cette figure, sous la forme de flèches, les six vecteurs déviations corrigés associés, reliant les cercles aux croix. Pour chaque couleur propre, l'écart chromatique associé, dans l'espace a* b*, est égal à la longueur du vecteur déviation corrigé qui lui correspond.

Suivant une variante de réalisation, le premier critère d'acceptation de la couleur test porte sur l'indice moyen de rendu des couleurs $R96_a$ de la source test, comparé à une valeur test $R96_0$.

L'indice moyen de rendu des couleurs $R96_a$ est fourni par la formule suivante :

$$R96_a = \frac{1}{N}\sum_{i=1}^{6} R96_i \, ,$$

où $R96_i$ est l'indice de rendu des couleurs de la source test pour chaque couleur i de la palette test, fourni lui-même par la formule suivante :

$$R96_i = 100 - c\Delta E^*_{ab,i}$$

où c = 3,2562. La valeur test $R96_0$ est par exemple choisie égale à 85 ou, de préférence, 90.

Le diagramme de la figure 12 illustre le principe de l'acceptation ou du refus d'une couleur test parmi la gamme.

Il est ainsi possible de constituer une gamme de couleurs à partir d'un éventail prédéterminé, en répétant les opérations qui précèdent jusqu'à obtenir le nombre souhaité de couleurs pour cette gamme.

Ce nombre est laissé à l'appréciation de l'homme du métier ; toutefois, à titre d'exemple, l'on peut constituer une gamme de couleurs dont les teintes sont distinctes : par exemple, six couleurs de teintes fondamentales : un vert, un bleu, un pourpre, un rouge, un orange, un jaune, ou encore une gamme de couleurs de même teinte mais dont les saturations et les luminosités sont différentes : par exemple une dizaine de bleus plus ou moins saturés et lumineux.

La couleur finale souhaitée du verre étant connue, celle-ci est obtenue de manière concrète par un mélange de colorants primaires. Selon un mode de réalisation la concentration de chaque colorant primaire est calculée, par le procédé dit du mélange soustractif bien connu de l'homme du métier. Il est alors possible de procéder à la fabrication du verre, après avoir sélectionné sa couleur parmi la gamme de couleur établie de la manière décrite précédemment.

L'on fournit à présent trois couleurs tests acceptables, de teintes respectives grise, verte et brune et qui forment donc une gamme telle que définie par l'invention.

Chacune de ces couleurs peut être caractérisée par la distribution spectrale de son facteur de transmission $\tau 1 (\lambda)$, exprimé en pourcentage en fonction de la longueur d'onde $\lambda$ de la lumière incidente, exprimée en nanomètres (nm).

Les distributions spectrales respectives des trois couleurs de teintes grise, verte et brune précitées et appelées respectivement GRIS, VERT et BRUN, sont fournies par les tableaux de valeurs suivants :

| GRIS | |
|---|---|
| Longueur d'onde λ (nm) | Facteur de transmission τ 1 (%) |
| 350 | 0,151694625 |
| 351 | 0,206969129 |
| 352 | 0,263616063 |
| 353 | 0,341560226 |
| 354 | 0,435973016 |
| 355 | 0,595800287 |
| 356 | 0,785995527 |
| 357 | 0,996956708 |
| 358 | 1,298629716 |
| 359 | 1,649411527 |
| 360 | 2,144257282 |
| 361 | 2,711832274 |
| 362 | 3,419099229 |
| 363 | 4,028315894 |
| 364 | 4,685020735 |
| 365 | 5,430495265 |
| 366 | 6,247534403 |
| 367 | 7,168632636 |
| 368 | 8,027566852 |
| 369 | 9,254469087 |
| 370 | 10,6302534 |
| 371 | 12,08396857 |
| 372 | 13,55805465 |
| 373 | 14,95109773 |
| 374 | 16,17059236 |
| 375 | 17,46510848 |
| 376 | 18,70391852 |
| 377 | 19,83943138 |
| 378 | 20,93915208 |
| 379 | 22,01115257 |
| 380 | 23,01171396 |
| 381 | 23,93718868 |
| 382 | 24,79082183 |
| 383 | 25,54678394 |
| 384 | 26,24337578 |
| 385 | 26,90313523 |
| 386 | 27,51481596 |

(suite)

| GRIS | |
|---|---|
| Longueur d'onde λ (nm) | Facteur de transmission τ 1 (%) |
| 387 | 28,06856778 |
| 388 | 28,59218398 |
| 389 | 29,08606938 |
| 390 | 29,40466351 |
| 391 | 29,80119144 |
| 392 | 30,15091518 |
| 393 | 30,55737226 |
| 394 | 30,84917168 |
| 395 | 31,10049734 |
| 396 | 31,42079566 |
| 397 | 31,61423652 |
| 398 | 31,88712611 |
| 399 | 32,24008281 |
| 400 | 32,41756083 |
| 401 | 32,65591012 |
| 402 | 32,93345185 |
| 403 | 33,21313361 |
| 404 | 33,38474983 |
| 405 | 33,6823143 |
| 406 | 34,13360388 |
| 407 | 34,32195772 |
| 408 | 34,5226446 |
| 409 | 34,86624106 |
| 410 | 35,21047366 |
| 411 | 35,58333449 |
| 412 | 35,80562537 |
| 413 | 36,16191166 |
| 414 | 36,46660816 |
| 415 | 36,79931779 |
| 416 | 37,15259937 |
| 417 | 37,47971435 |
| 418 | 37,76879932 |
| 419 | 37,99422901 |
| 420 | 38,30384897 |
| 421 | 38,68958152 |
| 422 | 39,0879526 |
| 423 | 39,42111231 |

(suite)

| GRIS | |
|---|---|
| Longueur d'onde λ (nm) | Facteur de transmission τ 1 (%) |
| 424 | 39,72176954 |
| 425 | 40,13693778 |
| 426 | 40,46828425 |
| 427 | 40,70035149 |
| 428 | 41,13468931 |
| 429 | 41,31302158 |
| 430 | 41,74417977 |
| 431 | 42,33024774 |
| 432 | 42,67726419 |
| 433 | 42,82709685 |
| 434 | 43,3014327 |
| 435 | 43,63963746 |
| 436 | 44,00318533 |
| 437 | 44,37853157 |
| 438 | 44,62371228 |
| 439 | 45,08605578 |
| 440 | 45,31633393 |
| 441 | 45,61595221 |
| 442 | 46,05367317 |
| 443 | 46,29031653 |
| 444 | 46,61029233 |
| 445 | 46,88674368 |
| 446 | 47,11856161 |
| 447 | 47,40926976 |
| 448 | 47,60027302 |
| 449 | 47,83309781 |
| 450 | 48,19463075 |
| 451 | 48,44163701 |
| 452 | 48,64160583 |
| 453 | 48,83596531 |
| 454 | 49,00828107 |
| 455 | 49,28087968 |
| 456 | 49,54683384 |
| 457 | 49,67233092 |
| 458 | 49,90838573 |
| 459 | 50,14468141 |
| 460 | 50,40367427 |

(suite)

| GRIS | |
|---|---|
| Longueur d'onde λ (nm) | Facteur de transmission τ 1 (%) |
| 461 | 50,66444983 |
| 462 | 50,74929703 |
| 463 | 50,71988507 |
| 464 | 50,84790673 |
| 465 | 50,99842038 |
| 466 | 51,2557445 |
| 467 | 51,2577705 |
| 468 | 51,26857718 |
| 469 | 51,39753233 |
| 470 | 51,34699382 |
| 471 | 51,27015335 |
| 472 | 51,1108684 |
| 473 | 51,13983328 |
| 474 | 51,17005058 |
| 475 | 51,16589324 |
| 476 | 51,0857339 |
| 477 | 51,05343627 |
| 478 | 51,06375135 |
| 479 | 51,02306375 |
| 480 | 51,04245077 |
| 481 | 51,10738923 |
| 482 | 51,12523652 |
| 483 | 51,13230981 |
| 484 | 51,28828273 |
| 485 | 50,81754489 |
| 486 | 51,73928913 |
| 487 | 52,21340557 |
| 488 | 51,74542471 |
| 489 | 51,78179865 |
| 490 | 51,90657325 |
| 491 | 51,98779226 |
| 492 | 51,9865365 |
| 493 | 52,01359901 |
| 494 | 52,12920118 |
| 495 | 52,11340653 |
| 496 | 51,91227268 |
| 497 | 52,04387546 |

(suite)

| GRIS | |
|---|---|
| Longueur d'onde λ (nm) | Facteur de transmission τ 1 (%) |
| 498 | 51,78941768 |
| 499 | 51,7382666 |
| 500 | 51,50158588 |
| 501 | 51,19095477 |
| 502 | 50,91651083 |
| 503 | 50,65877615 |
| 504 | 50,35842556 |
| 505 | 50,01755161 |
| 506 | 49,59973921 |
| 507 | 49,24474856 |
| 508 | 48,82181173 |
| 509 | 48,56689424 |
| 510 | 48,15369141 |
| 511 | 47,88406813 |
| 512 | 47,62139199 |
| 513 | 47,44968041 |
| 514 | 47,34778256 |
| 515 | 47,22878071 |
| 516 | 47,15106189 |
| 517 | 47,15644627 |
| 518 | 47,23500375 |
| 519 | 47,42218076 |
| 520 | 47,59379283 |
| 521 | 47,66522807 |
| 522 | 47,96847225 |
| 523 | 48,16786285 |
| 524 | 48,42036693 |
| 525 | 48,60925228 |
| 526 | 48,87254774 |
| 527 | 49,14029069 |
| 528 | 49,28120433 |
| 529 | 49,44455809 |
| 530 | 49,52475222 |
| 531 | 49,60071947 |
| 532 | 49,62316186 |
| 533 | 49,59886788 |
| 534 | 49,49485439 |

(suite)

| GRIS | |
|---|---|
| Longueur d'onde λ (nm) | Facteur de transmission τ 1 (%) |
| 535 | 49,39344518 |
| 536 | 49,23155757 |
| 537 | 48,93622997 |
| 538 | 48,64513078 |
| 539 | 48,33675979 |
| 540 | 47,91088874 |
| 541 | 47,48699707 |
| 542 | 47,06437534 |
| 543 | 46,61438661 |
| 544 | 46,11935334 |
| 545 | 45,63428679 |
| 546 | 45,11794672 |
| 547 | 44,62410424 |
| 548 | 44,28916116 |
| 549 | 43,90174713 |
| 550 | 43,48533873 |
| 551 | 43,1531623 |
| 552 | 42,94962397 |
| 553 | 42,81261641 |
| 554 | 42,70126215 |
| 555 | 42,63923257 |
| 556 | 42,74779661 |
| 557 | 42,81355655 |
| 558 | 42,99463521 |
| 559 | 43,15003531 |
| 560 | 43,37728285 |
| 561 | 43,73403514 |
| 562 | 44,06777974 |
| 563 | 44,34989006 |
| 564 | 44,67793363 |
| 565 | 45,06239974 |
| 566 | 45,36292896 |
| 567 | 45,65864409 |
| 568 | 45,94024409 |
| 569 | 46,13039355 |
| 570 | 46,45548625 |
| 571 | 46,65739818 |

(suite)

| GRIS | |
|---|---|
| Longueur d'onde λ (nm) | Facteur de transmission τ 1 (%) |
| 572 | 46,86574468 |
| 573 | 46,88149305 |
| 574 | 46,99249908 |
| 575 | 47,19114882 |
| 576 | 47,19394685 |
| 577 | 46,95289021 |
| 578 | 47,3254339 |
| 579 | 47,06199836 |
| 580 | 47,00364509 |
| 581 | 46,62513578 |
| 582 | 47,13532647 |
| 583 | 46,92155686 |
| 584 | 46,37364251 |
| 585 | 46,44967191 |
| 586 | 46,43447646 |
| 587 | 46,09738207 |
| 588 | 46,04366239 |
| 589 | 45,95426868 |
| 590 | 45,73932639 |
| 591 | 45,53788741 |
| 592 | 45,21593932 |
| 593 | 45,1646353 |
| 594 | 45,14272233 |
| 595 | 44,91737024 |
| 596 | 44,89005672 |
| 597 | 44,6244962 |
| 598 | 44,36907978 |
| 599 | 44,40777666 |
| 600 | 44,27282529 |
| 601 | 44,196962 |
| 602 | 44,02937912 |
| 603 | 43,89345712 |
| 604 | 43,93096743 |
| 605 | 43,749884 |
| 606 | 43,70830499 |
| 607 | 43,65113846 |
| 608 | 43,59031343 |

(suite)

| GRIS | |
|---|---|
| Longueur d'onde λ (nm) | Facteur de transmission τ 1 (%) |
| 609 | 43,49422022 |
| 610 | 43,48018257 |
| 611 | 43,45727368 |
| 612 | 43,43151561 |
| 613 | 43,3816647 |
| 614 | 43,39309771 |
| 615 | 43,39900595 |
| 616 | 43,42522152 |
| 617 | 43,41149212 |
| 618 | 43,5309114 |
| 619 | 43,46557676 |
| 620 | 43,47588623 |
| 621 | 43,56591149 |
| 622 | 43,56093708 |
| 623 | 43,68786608 |
| 624 | 43,77621539 |
| 625 | 43,82507612 |
| 626 | 43,9202607 |
| 627 | 43,94129079 |
| 628 | 44,08510482 |
| 629 | 44,1257826 |
| 630 | 44,29275976 |
| 631 | 44,39636878 |
| 632 | 44,54695426 |
| 633 | 44,69196542 |
| 634 | 44,8248476 |
| 635 | 44,90642312 |
| 636 | 45,03925063 |
| 637 | 45,27147674 |
| 638 | 45,45636261 |
| 639 | 45,6852214 |
| 640 | 45,8154225 |
| 641 | 46,04669573 |
| 642 | 46,27598614 |
| 643 | 46,42835889 |
| 644 | 46,66241878 |
| 645 | 46,90322007 |

(suite)

| GRIS | |
|---|---|
| Longueur d'onde λ (nm) | Facteur de transmission τ 1 (%) |
| 646 | 47,28533674 |
| 647 | 47,51015231 |
| 648 | 47,71015217 |
| 649 | 47,96383775 |
| 650 | 48,35300247 |
| 651 | 48,62911032 |
| 652 | 48,95009426 |
| 653 | 49,18466089 |
| 654 | 49,69360534 |
| 655 | 48,72220946 |
| 656 | 50,01897947 |
| 657 | 51,63668291 |
| 658 | 51,19792472 |
| 659 | 51,51968397 |
| 660 | 51,92390148 |
| 661 | 52,40730449 |
| 662 | 52,82579372 |
| 663 | 53,250548 |
| 664 | 53,70159 |
| 665 | 54,21142272 |
| 666 | 54,75434387 |
| 667 | 55,21557701 |
| 668 | 55,72717749 |
| 669 | 56,23388555 |
| 670 | 56,88980521 |
| 671 | 57,4152792 |
| 672 | 57,96915171 |
| 673 | 58,59845449 |
| 674 | 59,20272925 |
| 675 | 59,82229886 |
| 676 | 60,43972495 |
| 677 | 61,0708989 |
| 678 | 61,71923469 |
| 679 | 62,4106236 |
| 680 | 63,07013506 |
| 681 | 63,73367667 |
| 682 | 64,40349207 |

(suite)

| GRIS | |
|---|---|
| Longueur d'onde λ (nm) | Facteur de transmission τ 1 (%) |
| 683 | 65,06205693 |
| 684 | 65,73038704 |
| 685 | 66,40835304 |
| 686 | 67,13973722 |
| 687 | 67,80513555 |
| 688 | 68,48915906 |
| 689 | 69,15168103 |
| 690 | 69,83594554 |
| 691 | 70,45763269 |
| 692 | 71,11451866 |
| 693 | 71,79344999 |
| 694 | 72,47711238 |
| 695 | 73,08169843 |
| 696 | 73,71609041 |
| 697 | 74,25531403 |
| 698 | 74,98942093 |
| 699 | 75,56317601 |
| 700 | 76,15018309 |
| 701 | 76,73062887 |
| 702 | 77,2800235 |
| 703 | 77,88584058 |
| 704 | 78,39305198 |
| 705 | 78,94308092 |
| 706 | 79,39334283 |
| 707 | 79,94354339 |
| 708 | 80,50621887 |
| 709 | 80,9474412 |
| 710 | 81,39054552 |
| 711 | 81,90313287 |
| 712 | 82,357979 |
| 713 | 82,75118097 |
| 714 | 83,21128488 |
| 715 | 83,63390107 |
| 716 | 84,01400576 |
| 717 | 84,40213929 |
| 718 | 84,73901662 |
| 719 | 85,14040798 |

(suite)

| GRIS | |
|---|---|
| Longueur d'onde λ (nm) | Facteur de transmission τ 1 (%) |
| 720 | 85,48849151 |
| 721 | 85,82744317 |
| 722 | 86,18193118 |
| 723 | 86,46627167 |
| 724 | 86,74945482 |
| 725 | 86,98866418 |
| 726 | 87,32800248 |
| 727 | 87,60650485 |
| 728 | 87,78617616 |
| 729 | 88,07155469 |
| 730 | 88,27097983 |
| 731 | 88,52876931 |
| 732 | 88,77113065 |
| 733 | 88,95123717 |
| 734 | 89,1350365 |
| 735 | 89,39201228 |
| 736 | 89,53188533 |
| 737 | 89,73757296 |
| 738 | 89,91727084 |
| 739 | 90,02889977 |
| 740 | 90,21393536 |
| 741 | 90,41761595 |
| 742 | 90,47799515 |
| 743 | 90,68127628 |
| 744 | 90,79764191 |
| 745 | 90,95888721 |
| 746 | 91,06281034 |
| 747 | 91,14343243 |
| 748 | 91,28544459 |
| 749 | 91,38954014 |
| 750 | 91,49797365 |

| VERT | |
|---|---|
| Longueur d'onde λ (nm) | Facteur de transmission τ 2 (%) |
| 350 | 0,14899478 |
| 351 | 0,19307862 |

(suite)

| VERT | |
|---|---|
| Longueur d'onde λ (nm) | Facteur de transmission τ 2 (%) |
| 352 | 0,24360347 |
| 353 | 0,33157605 |
| 354 | 0,40496553 |
| 355 | 0,51783277 |
| 356 | 0,67949269 |
| 357 | 0,87017322 |
| 358 | 1,11154255 |
| 359 | 1,41152548 |
| 360 | 1,78640852 |
| 361 | 2,16875379 |
| 362 | 2,70765511 |
| 363 | 3,16741351 |
| 364 | 3,636577 |
| 365 | 4,18171185 |
| 366 | 4,70786397 |
| 367 | 5,26999667 |
| 368 | 5,81153436 |
| 369 | 6,60475396 |
| 370 | 7,47641614 |
| 371 | 8,3472809 |
| 372 | 9,18857687 |
| 373 | 10,0106778 |
| 374 | 10,7023235 |
| 375 | 11,3986217 |
| 376 | 12,0003543 |
| 377 | 12,5758093 |
| 378 | 13,1024492 |
| 379 | 13,6240115 |
| 380 | 14,1031715 |
| 381 | 14,4542339 |
| 382 | 14,7753096 |
| 383 | 15,0952945 |
| 384 | 15,3456935 |
| 385 | 15,5457361 |
| 386 | 15,764406 |
| 387 | 15,9427868 |
| 388 | 16,0713303 |

(suite)

| VERT | |
|---|---|
| Longueur d'onde λ (nm) | Facteur de transmission τ 2 (%) |
| 389 | 16,1868993 |
| 390 | 16,272397 |
| 391 | 16,3476451 |
| 392 | 16,4424384 |
| 393 | 16,5666412 |
| 394 | 16,6134177 |
| 395 | 16,6486598 |
| 396 | 16,7674231 |
| 397 | 16,7616802 |
| 398 | 16,8440356 |
| 399 | 16,9610638 |
| 400 | 16,9747009 |
| 401 | 17,1297607 |
| 402 | 17,187447 |
| 403 | 17,3210806 |
| 404 | 17,469251 |
| 405 | 17,6123063 |
| 406 | 17,7924419 |
| 407 | 17,9129909 |
| 408 | 18,0896066 |
| 409 | 18,2994007 |
| 410 | 18,5403897 |
| 411 | 18,7487821 |
| 412 | 18,9380044 |
| 413 | 19,2306815 |
| 414 | 19,4752085 |
| 415 | 19,7351487 |
| 416 | 20,0198245 |
| 417 | 20,3374809 |
| 418 | 20,5851845 |
| 419 | 20,8798293 |
| 420 | 21,2136468 |
| 421 | 21,5152082 |
| 422 | 21,861776 |
| 423 | 22,2446301 |
| 424 | 22,5797307 |
| 425 | 22,9276314 |

(suite)

| VERT | |
|---|---|
| Longueur d'onde λ (nm) | Facteur de transmission τ 2 (%) |
| 426 | 23,3278195 |
| 427 | 23,6837618 |
| 428 | 24,0859321 |
| 429 | 24,4789616 |
| 430 | 24,9403236 |
| 431 | 25,4087629 |
| 432 | 25,8252495 |
| 433 | 26,2744558 |
| 434 | 26,7210878 |
| 435 | 27,147935 |
| 436 | 27,6901073 |
| 437 | 28,1609272 |
| 438 | 28,5985261 |
| 439 | 29,1439297 |
| 440 | 29,5833534 |
| 441 | 30,054603 |
| 442 | 30,6084791 |
| 443 | 31,057911 |
| 444 | 31,5359559 |
| 445 | 32,0118676 |
| 446 | 32,4406334 |
| 447 | 32,9517537 |
| 448 | 33,427884 |
| 449 | 33,8333898 |
| 450 | 34,3090722 |
| 451 | 34,7434969 |
| 452 | 35,1686688 |
| 453 | 35,6107715 |
| 454 | 36,0525729 |
| 455 | 36,4690106 |
| 456 | 36,8558461 |
| 457 | 37,2340277 |
| 458 | 37,6691576 |
| 459 | 38,0863662 |
| 460 | 38,4576615 |
| 461 | 38,9015382 |
| 462 | 39,2319029 |

(suite)

| VERT | |
|---|---|
| Longueur d'onde λ (nm) | Facteur de transmission τ 2 (%) |
| 463 | 39,5854087 |
| 464 | 39,9754434 |
| 465 | 40,3093512 |
| 466 | 40,7465844 |
| 467 | 40,9953685 |
| 468 | 41,4032957 |
| 469 | 41,7466548 |
| 470 | 42,0170429 |
| 471 | 42,344472 |
| 472 | 42,6012348 |
| 473 | 42,9489638 |
| 474 | 43,2614199 |
| 475 | 43,5258454 |
| 476 | 43,767853 |
| 477 | 44,0449481 |
| 478 | 44,3521301 |
| 479 | 44,5409876 |
| 480 | 44,8026076 |
| 481 | 45,0572545 |
| 482 | 45,2758511 |
| 483 | 45,4847199 |
| 484 | 45,7471614 |
| 485 | 45,7586149 |
| 486 | 46,3026178 |
| 487 | 46,4634439 |
| 488 | 46,4832419 |
| 489 | 46,7030133 |
| 490 | 46,8952901 |
| 491 | 47,0246026 |
| 492 | 47,197056 |
| 493 | 47,3119259 |
| 494 | 47,4689605 |
| 495 | 47,5167255 |
| 496 | 47,5734174 |
| 497 | 47,6989434 |
| 498 | 47,6719274 |
| 499 | 47,7640331 |

(suite)

| VERT | |
|---|---|
| Longueur d'onde λ (nm) | Facteur de transmission τ 2 (%) |
| 500 | 47,7543845 |
| 501 | 47,735303 |
| 502 | 47,7096283 |
| 503 | 47,6910883 |
| 504 | 47,6460775 |
| 505 | 47,6115632 |
| 506 | 47,4934627 |
| 507 | 47,4177032 |
| 508 | 47,3083937 |
| 509 | 47,2184108 |
| 510 | 47,067786 |
| 511 | 46,9586644 |
| 512 | 46,8626574 |
| 513 | 46,7594531 |
| 514 | 46,6627262 |
| 515 | 46,5158147 |
| 516 | 46,4508959 |
| 517 | 46,3055665 |
| 518 | 46,1240122 |
| 519 | 46,0471002 |
| 520 | 45,9374195 |
| 521 | 45,7574091 |
| 522 | 45,6946525 |
| 523 | 45,4888152 |
| 524 | 45,3986045 |
| 525 | 45,2766465 |
| 526 | 45,1111111 |
| 527 | 44,9594083 |
| 528 | 44,7572761 |
| 529 | 44,5661314 |
| 530 | 44,4088493 |
| 531 | 44,1531159 |
| 532 | 43,9334757 |
| 533 | 43,6963092 |
| 534 | 43,3973859 |
| 535 | 43,1504143 |
| 536 | 42,8975001 |

(suite)

| VERT | |
|---|---|
| Longueur d'onde λ (nm) | Facteur de transmission τ 2 (%) |
| 537 | 42,5630841 |
| 538 | 42,2483419 |
| 539 | 41,9269957 |
| 540 | 41,5564116 |
| 541 | 41,2197762 |
| 542 | 40,9003252 |
| 543 | 40,5401509 |
| 544 | 40,1746783 |
| 545 | 39,8090036 |
| 546 | 39,4729125 |
| 547 | 39,0761951 |
| 548 | 38,8202138 |
| 549 | 38,4691483 |
| 550 | 38,1275366 |
| 551 | 37,8077999 |
| 552 | 37,5343205 |
| 553 | 37,2489933 |
| 554 | 37,0118894 |
| 555 | 36,7552229 |
| 556 | 36,5656382 |
| 557 | 36,3238696 |
| 558 | 36,1707271 |
| 559 | 35,9319641 |
| 560 | 35,7946194 |
| 561 | 35,6751869 |
| 562 | 35,5132357 |
| 563 | 35,3567554 |
| 564 | 35,2486901 |
| 565 | 35,1682054 |
| 566 | 35,0333185 |
| 567 | 34,9110594 |
| 568 | 34,777617 |
| 569 | 34,6281038 |
| 570 | 34,5359137 |
| 571 | 34,4181112 |
| 572 | 34,2933298 |
| 573 | 34,1214634 |

(suite)

| VERT | |
|---|---|
| Longueur d'onde λ (nm) | Facteur de transmission τ 2 (%) |
| 574 | 34,0253915 |
| 575 | 33,9123835 |
| 576 | 33,7625863 |
| 577 | 33,5288209 |
| 578 | 33,5671286 |
| 579 | 33,2855623 |
| 580 | 33,1847747 |
| 581 | 32,9114019 |
| 582 | 33,0096195 |
| 583 | 32,7836591 |
| 584 | 32,5141618 |
| 585 | 32,4688555 |
| 586 | 32,3399896 |
| 587 | 32,1615944 |
| 588 | 32,0665338 |
| 589 | 31,9665592 |
| 590 | 31,8331153 |
| 591 | 31,7239748 |
| 592 | 31,5678965 |
| 593 | 31,5493933 |
| 594 | 31,4798439 |
| 595 | 31,4061716 |
| 596 | 31,3972074 |
| 597 | 31,3412734 |
| 598 | 31,2863322 |
| 599 | 31,3619959 |
| 600 | 31,3370067 |
| 601 | 31,3998274 |
| 602 | 31,4277652 |
| 603 | 31,5020415 |
| 604 | 31,662939 |
| 605 | 31,7204222 |
| 606 | 31,8503161 |
| 607 | 31,9980224 |
| 608 | 32,1666797 |
| 609 | 32,3307588 |
| 610 | 32,515804 |

(suite)

| VERT | |
|---|---|
| Longueur d'onde λ (nm) | Facteur de transmission τ 2 (%) |
| 611 | 32,7023392 |
| 612 | 32,924124 |
| 613 | 33,1098751 |
| 614 | 33,3539738 |
| 615 | 33,5910931 |
| 616 | 33,8397798 |
| 617 | 34,0826728 |
| 618 | 34,3604925 |
| 619 | 34,5728665 |
| 620 | 34,8513144 |
| 621 | 35,0580218 |
| 622 | 35,2900476 |
| 623 | 35,5877886 |
| 624 | 35,8437007 |
| 625 | 36,1193737 |
| 626 | 36,431951 |
| 627 | 36,6804796 |
| 628 | 36,9934445 |
| 629 | 37,2255254 |
| 630 | 37,5639218 |
| 631 | 37,8804315 |
| 632 | 38,1980143 |
| 633 | 38,5425426 |
| 634 | 38,889666 |
| 635 | 39,2333675 |
| 636 | 39,5763694 |
| 637 | 39,9570132 |
| 638 | 40,300589 |
| 639 | 40,6957043 |
| 640 | 41,0578917 |
| 641 | 41,4476875 |
| 642 | 41,7715054 |
| 643 | 42,1504863 |
| 644 | 42,6101229 |
| 645 | 42,989726 |
| 646 | 43,4678675 |
| 647 | 43,8723536 |

(suite)

| VERT | |
|---|---|
| Longueur d'onde λ (nm) | Facteur de transmission τ 2 (%) |
| 648 | 44,3154279 |
| 649 | 44,7639598 |
| 650 | 45,1800105 |
| 651 | 45,696258 |
| 652 | 46,1773186 |
| 653 | 46,6727691 |
| 654 | 47,27973 |
| 655 | 46,9639237 |
| 656 | 47,9617313 |
| 657 | 48,7063775 |
| 658 | 49,1300405 |
| 659 | 49,742735 |
| 660 | 50,2458676 |
| 661 | 50,7671308 |
| 662 | 51,3741746 |
| 663 | 51,9407793 |
| 664 | 52,508444 |
| 665 | 53,1365429 |
| 666 | 53,6787176 |
| 667 | 54,3030447 |
| 668 | 54,937046 |
| 669 | 55,5108772 |
| 670 | 56,1509649 |
| 671 | 56,7162993 |
| 672 | 57,3357784 |
| 673 | 57,981628 |
| 674 | 58,5902197 |
| 675 | 59,2053294 |
| 676 | 59,8437151 |
| 677 | 60,484734 |
| 678 | 61,1064475 |
| 679 | 61,7416012 |
| 680 | 62,4034975 |
| 681 | 63,0438262 |
| 682 | 63,6886275 |
| 683 | 64,2977932 |
| 684 | 64,9427265 |

(suite)

| VERT | |
|---|---|
| Longueur d'onde λ (nm) | Facteur de transmission τ 2 (%) |
| 685 | 65,5499235 |
| 686 | 66,2175939 |
| 687 | 66,8509486 |
| 688 | 67,4736163 |
| 689 | 68,0841405 |
| 690 | 68,7016976 |
| 691 | 69,3008077 |
| 692 | 69,9165028 |
| 693 | 70,5310077 |
| 694 | 71,1513823 |
| 695 | 71,7272665 |
| 696 | 72,2952691 |
| 697 | 72,827298 |
| 698 | 73,4454489 |
| 699 | 74,000728 |
| 700 | 74,5554574 |
| 701 | 75,121768 |
| 702 | 75,6159603 |
| 703 | 76,1598824 |
| 704 | 76,6686481 |
| 705 | 77,1813209 |
| 706 | 77,6353421 |
| 707 | 78,1213633 |
| 708 | 78,6268279 |
| 709 | 79,0806691 |
| 710 | 79,5056979 |
| 711 | 79,9721631 |
| 712 | 80,3767398 |
| 713 | 80,7940075 |
| 714 | 81,2139765 |
| 715 | 81,6058381 |
| 716 | 81,9891475 |
| 717 | 82,3541812 |
| 718 | 82,6603735 |
| 719 | 83,0517364 |
| 720 | 83,3927457 |
| 721 | 83,7193433 |

(suite)

| VERT | |
|---|---|
| Longueur d'onde λ (nm) | Facteur de transmission τ 2 (%) |
| 722 | 84,0213856 |
| 723 | 84,3078539 |
| 724 | 84,6224249 |
| 725 | 84,8749638 |
| 726 | 85,180053 |
| 727 | 85,4629646 |
| 728 | 85,6781166 |
| 729 | 85,9322964 |
| 730 | 86,1605488 |
| 731 | 86,4023082 |
| 732 | 86,6624425 |
| 733 | 86,8672604 |
| 734 | 87,0488562 |
| 735 | 87,2892745 |
| 736 | 87,486352 |
| 737 | 87,6877254 |
| 738 | 87,8920713 |
| 739 | 88,0371366 |
| 740 | 88,2031634 |
| 741 | 88,4257963 |
| 742 | 88,5351848 |
| 743 | 88,6953337 |
| 744 | 88,8668948 |
| 745 | 89,0120054 |
| 746 | 89,1366024 |
| 747 | 89,2584337 |
| 748 | 89,3874976 |
| 749 | 89,4856952 |
| 750 | 89,5900992 |

| BRUN | |
|---|---|
| Longueur d'onde λ (nm) | Facteur de transmission τ 3 (%) |
| 350 | 0,11858921 |
| 351 | 0,13166479 |
| 352 | 0,16038578 |
| 353 | 0,23249626 |

(suite)

| BRUN | |
|---|---|
| Longueur d'onde λ (nm) | Facteur de transmission τ 3 (%) |
| 354 | 0,27983577 |
| 355 | 0,36079104 |
| 356 | 0,4728814 |
| 357 | 0,59939854 |
| 358 | 0,77679339 |
| 359 | 0,99369353 |
| 360 | 1,27734152 |
| 361 | 1,61186549 |
| 362 | 2,04253813 |
| 363 | 2,42335776 |
| 364 | 2,86878412 |
| 365 | 3,33963348 |
| 366 | 3,77023423 |
| 367 | 4,3092558 |
| 368 | 4,79261464 |
| 369 | 5,50546723 |
| 370 | 6,34038223 |
| 371 | 7,21308281 |
| 372 | 8,08238191 |
| 373 | 8,96985643 |
| 374 | 9,89080474 |
| 375 | 10,8286786 |
| 376 | 11,6565823 |
| 377 | 12,4568832 |
| 378 | 13,2412847 |
| 379 | 14,0192782 |
| 380 | 14,6892566 |
| 381 | 15,3218539 |
| 382 | 15,9272154 |
| 383 | 16,4782225 |
| 384 | 16,9699677 |
| 385 | 17,4163164 |
| 386 | 17,7949036 |
| 387 | 18,1668341 |
| 388 | 18,5001275 |
| 389 | 18,7074921 |
| 390 | 18,8941402 |

(suite)

| BRUN | |
|---|---|
| Longueur d'onde λ (nm) | Facteur de transmission τ 3 (%) |
| 391 | 19,0895239 |
| 392 | 19,2080179 |
| 393 | 19,2989176 |
| 394 | 19,2688944 |
| 395 | 19,3036646 |
| 396 | 19,2781208 |
| 397 | 19,2290768 |
| 398 | 19,161256 |
| 399 | 19,0504117 |
| 400 | 18,8822778 |
| 401 | 18,803454 |
| 402 | 18,7049864 |
| 403 | 18,5849834 |
| 404 | 18,4474311 |
| 405 | 18,3687688 |
| 406 | 18,2828524 |
| 407 | 18,1713027 |
| 408 | 18,1441891 |
| 409 | 18,1173547 |
| 410 | 18,0811078 |
| 411 | 18,0555958 |
| 412 | 18,0401395 |
| 413 | 18,0546839 |
| 414 | 17,9979201 |
| 415 | 18,0101761 |
| 416 | 18,0347527 |
| 417 | 18,0166633 |
| 418 | 18,0253693 |
| 419 | 17,9717362 |
| 420 | 18,0062612 |
| 421 | 17,962425 |
| 422 | 17,9324726 |
| 423 | 17,8658506 |
| 424 | 17,8125356 |
| 425 | 17,7665179 |
| 426 | 17,7037389 |
| 427 | 17,6566451 |

(suite)

| BRUN | |
|---|---|
| Longueur d'onde λ (nm) | Facteur de transmission τ 3 (%) |
| 428 | 17,5735579 |
| 429 | 17,4887108 |
| 430 | 17,3864347 |
| 431 | 17,2845669 |
| 432 | 17,1391296 |
| 433 | 17,1572421 |
| 434 | 17,0942134 |
| 435 | 16,8795446 |
| 436 | 16,8743191 |
| 437 | 16,7952083 |
| 438 | 16,7013882 |
| 439 | 16,6483674 |
| 440 | 16,5415587 |
| 441 | 16,5337872 |
| 442 | 16,4482887 |
| 443 | 16,3959633 |
| 444 | 16,3489375 |
| 445 | 16,2586814 |
| 446 | 16,2323184 |
| 447 | 16,1821725 |
| 448 | 16,2070659 |
| 449 | 16,1776958 |
| 450 | 16,1980643 |
| 451 | 16,1621789 |
| 452 | 16,2146482 |
| 453 | 16,1979932 |
| 454 | 16,2273289 |
| 455 | 16,3275904 |
| 456 | 16,354539 |
| 457 | 16,4361933 |
| 458 | 16,4835063 |
| 459 | 16,5563855 |
| 460 | 16,6086393 |
| 461 | 16,7347957 |
| 462 | 16,9084438 |
| 463 | 17,056792 |
| 464 | 17,2067819 |

(suite)

| BRUN | |
|---|---|
| Longueur d'onde λ (nm) | Facteur de transmission τ 3 (%) |
| 465 | 17,2716668 |
| 466 | 17,4274109 |
| 467 | 17,5118452 |
| 468 | 17,7162613 |
| 469 | 17,8460494 |
| 470 | 18,0041262 |
| 471 | 18,2116891 |
| 472 | 18,3724398 |
| 473 | 18,5581491 |
| 474 | 18,6781839 |
| 475 | 18,8489702 |
| 476 | 18,95756 |
| 477 | 19,0886436 |
| 478 | 19,2995533 |
| 479 | 19,4346233 |
| 480 | 19,6500891 |
| 481 | 19,7765787 |
| 482 | 19,9317434 |
| 483 | 20,1206623 |
| 484 | 20,288192 |
| 485 | 20,6073913 |
| 486 | 20,6250019 |
| 487 | 20,3658146 |
| 488 | 20,790384 |
| 489 | 21,1197567 |
| 490 | 21,3134294 |
| 491 | 21,4676373 |
| 492 | 21,594016 |
| 493 | 21,7281515 |
| 494 | 21,8641765 |
| 495 | 21,9306297 |
| 496 | 22,024497 |
| 497 | 22,0263349 |
| 498 | 22,0210634 |
| 499 | 22,102889 |
| 500 | 22,0013428 |
| 501 | 21,951974 |

(suite)

| BRUN | |
|---|---|
| Longueur d'onde λ (nm) | Facteur de transmission τ 3 (%) |
| 502 | 21,8665292 |
| 503 | 21,7617198 |
| 504 | 21,5515234 |
| 505 | 21,3937531 |
| 506 | 21,2250628 |
| 507 | 21,030669 |
| 508 | 20,8390623 |
| 509 | 20,6036357 |
| 510 | 20,3583922 |
| 511 | 20,1866033 |
| 512 | 19,9695514 |
| 513 | 19,8144839 |
| 514 | 19,646508 |
| 515 | 19,4991722 |
| 516 | 19,471189 |
| 517 | 19,3716917 |
| 518 | 19,3056146 |
| 519 | 19,3503491 |
| 520 | 19,3265259 |
| 521 | 19,4067327 |
| 522 | 19,5184929 |
| 523 | 19,6353374 |
| 524 | 19,7723232 |
| 525 | 19,940105 |
| 526 | 20,1694556 |
| 527 | 20,3378381 |
| 528 | 20,5424665 |
| 529 | 20,7580405 |
| 530 | 20,9180576 |
| 531 | 21,135995 |
| 532 | 21,3325334 |
| 533 | 21,5504822 |
| 534 | 21,6538938 |
| 535 | 21,8244587 |
| 536 | 21,9292813 |
| 537 | 22,0271088 |
| 538 | 22,1271218 |

(suite)

| BRUN | |
|---|---|
| Longueur d'onde λ (nm) | Facteur de transmission τ 3 (%) |
| 539 | 22,1558081 |
| 540 | 22,194423 |
| 541 | 22,2017835 |
| 542 | 22,1834598 |
| 543 | 22,1069179 |
| 544 | 22,0132311 |
| 545 | 21,9009364 |
| 546 | 21,8292997 |
| 547 | 21,7510182 |
| 548 | 21,6495672 |
| 549 | 21,4886725 |
| 550 | 21,4358406 |
| 551 | 21,3524047 |
| 552 | 21,3177825 |
| 553 | 21,2828426 |
| 554 | 21,2663981 |
| 555 | 21,3390458 |
| 556 | 21,4084155 |
| 557 | 21,496507 |
| 558 | 21,6314618 |
| 559 | 21,8175587 |
| 560 | 22,070006 |
| 561 | 22,3071447 |
| 562 | 22,5355952 |
| 563 | 22,8371353 |
| 564 | 23,1686425 |
| 565 | 23,491546 |
| 566 | 23,8105302 |
| 567 | 24,153144 |
| 568 | 24,4388405 |
| 569 | 24,7890799 |
| 570 | 25,0389891 |
| 571 | 25,3006387 |
| 572 | 25,530969 |
| 573 | 25,758305 |
| 574 | 26,0789036 |
| 575 | 26,194495 |

(suite)

| BRUN | |
|---|---|
| Longueur d'onde λ (nm) | Facteur de transmission τ 3 (%) |
| 576 | 26,3893492 |
| 577 | 26,6113525 |
| 578 | 26,8614002 |
| 579 | 26,7683648 |
| 580 | 27,1018325 |
| 581 | 27,2391193 |
| 582 | 27,4257801 |
| 583 | 27,1930411 |
| 584 | 27,5421999 |
| 585 | 27,7770123 |
| 586 | 27,6404133 |
| 587 | 27,8335521 |
| 588 | 27,9701843 |
| 589 | 28,0172717 |
| 590 | 28,23734 |
| 591 | 28,3816253 |
| 592 | 28,6224 |
| 593 | 28,931722 |
| 594 | 29,0533222 |
| 595 | 29,4171928 |
| 596 | 29,688389 |
| 597 | 30,0602793 |
| 598 | 30,408636 |
| 599 | 30,8234404 |
| 600 | 31,113066 |
| 601 | 31,4879328 |
| 602 | 31,7784982 |
| 603 | 32,1418257 |
| 604 | 32,394647 |
| 605 | 32,5610329 |
| 606 | 32,7525741 |
| 607 | 32,8649647 |
| 608 | 32,9391656 |
| 609 | 32,9121246 |
| 610 | 32,8995517 |
| 611 | 32,6836018 |
| 612 | 32,5185174 |

(suite)

| BRUN | |
|---|---|
| Longueur d'onde λ (nm) | Facteur de transmission τ 3 (%) |
| 613 | 32,2178604 |
| 614 | 31,9006431 |
| 615 | 31,5463452 |
| 616 | 31,1355519 |
| 617 | 30,7172219 |
| 618 | 30,3530635 |
| 619 | 29,8225983 |
| 620 | 29,4024682 |
| 621 | 28,8365813 |
| 622 | 28,4184825 |
| 623 | 27,9870185 |
| 624 | 27,5590186 |
| 625 | 27,2083918 |
| 626 | 27,0242194 |
| 627 | 26,7628987 |
| 628 | 26,5097509 |
| 629 | 26,239054 |
| 630 | 26,0271855 |
| 631 | 25,8558343 |
| 632 | 25,730378 |
| 633 | 25,6902366 |
| 634 | 25,6957093 |
| 635 | 25,7386851 |
| 636 | 25,8415304 |
| 637 | 25,9609718 |
| 638 | 26,0699715 |
| 639 | 26,2823614 |
| 640 | 26,5294925 |
| 641 | 26,8863035 |
| 642 | 27,2796441 |
| 643 | 27,8484082 |
| 644 | 28,4768282 |
| 645 | 29,230904 |
| 646 | 30,0941614 |
| 647 | 31,0451601 |
| 648 | 32,2134743 |
| 649 | 33,4348582 |

(suite)

| BRUN | |
|---|---|
| Longueur d'onde $\lambda$ (nm) | Facteur de transmission $\tau$ 3 (%) |
| 650 | 34,8208685 |
| 651 | 36,2431583 |
| 652 | 37,9256264 |
| 653 | 39,664852 |
| 654 | 41,491307 |
| 655 | 43,3837605 |
| 656 | 45,4567619 |
| 657 | 45,9886925 |
| 658 | 49,1678149 |
| 659 | 51,6650382 |
| 660 | 53,844941 |
| 661 | 56,0419479 |
| 662 | 58,065722 |
| 663 | 60,1373501 |
| 664 | 62,1300327 |
| 665 | 64,1057763 |
| 666 | 65,9598517 |
| 667 | 67,7418849 |
| 668 | 69,5076223 |
| 669 | 71,1267003 |
| 670 | 72,7218255 |
| 671 | 74,1091946 |
| 672 | 75,5079414 |
| 673 | 76,7988993 |
| 674 | 77,9267277 |
| 675 | 79,0166166 |
| 676 | 80,0250398 |
| 677 | 80,9552627 |
| 678 | 81,8254735 |
| 679 | 82,642224 |
| 680 | 83,3570442 |
| 681 | 84,0293196 |
| 682 | 84,6553221 |
| 683 | 85,1452691 |
| 684 | 85,6318462 |
| 685 | 86,1236624 |
| 686 | 86,6129777 |

# EP 1 273 894 B1

(suite)

| BRUN | |
| --- | --- |
| Longueur d'onde λ (nm) | Facteur de transmission τ 3 (%) |
| 687 | 86,928132 |
| 688 | 87,2450077 |
| 689 | 87,553425 |
| 690 | 87,8359252 |
| 691 | 88,0901228 |
| 692 | 88,3596072 |
| 693 | 88,5721315 |
| 694 | 88,8050556 |
| 695 | 88,9254574 |
| 696 | 89,1009854 |
| 697 | 89,2429507 |
| 698 | 89,459957 |
| 699 | 89,5684612 |
| 700 | 89,6611477 |
| 701 | 89,7598431 |
| 702 | 89,8629883 |
| 703 | 90,001029 |
| 704 | 90,095548 |
| 705 | 90,1464078 |
| 706 | 90,1570979 |
| 707 | 90,223841 |
| 708 | 90,4209914 |
| 709 | 90,4213885 |
| 710 | 90,3898233 |
| 711 | 90,4517729 |
| 712 | 90,4706442 |
| 713 | 90,4970706 |
| 714 | 90,5925084 |
| 715 | 90,6100163 |
| 716 | 90,6454402 |
| 717 | 90,6627592 |
| 718 | 90,6133989 |
| 719 | 90,6490232 |
| 720 | 90,6181745 |
| 721 | 90,6233484 |
| 722 | 90,5992724 |
| 723 | 90,6102153 |

(suite)

| BRUN | |
|---|---|
| Longueur d'onde λ (nm) | Facteur de transmission τ 3 (%) |
| 724 | 90,5734128 |
| 725 | 90,5813689 |
| 726 | 90,5976809 |
| 727 | 90,6784885 |
| 728 | 90,6040473 |
| 729 | 90,6006651 |
| 730 | 90,6026546 |
| 731 | 90,5915138 |
| 732 | 90,7097561 |
| 733 | 90,6404641 |
| 734 | 90,6225524 |
| 735 | 90,707565 |
| 736 | 90,6892418 |
| 737 | 90,7270874 |
| 738 | 90,7892682 |
| 739 | 90,6862546 |
| 740 | 90,7368501 |
| 741 | 90,8177819 |
| 742 | 90,7153336 |
| 743 | 90,7187202 |
| 744 | 90,759169 |
| 745 | 90,6872503 |
| 746 | 90,7420308 |
| 747 | 90,6593748 |
| 748 | 90,7332637 |
| 749 | 90,6844624 |
| 750 | 90,6486251 |

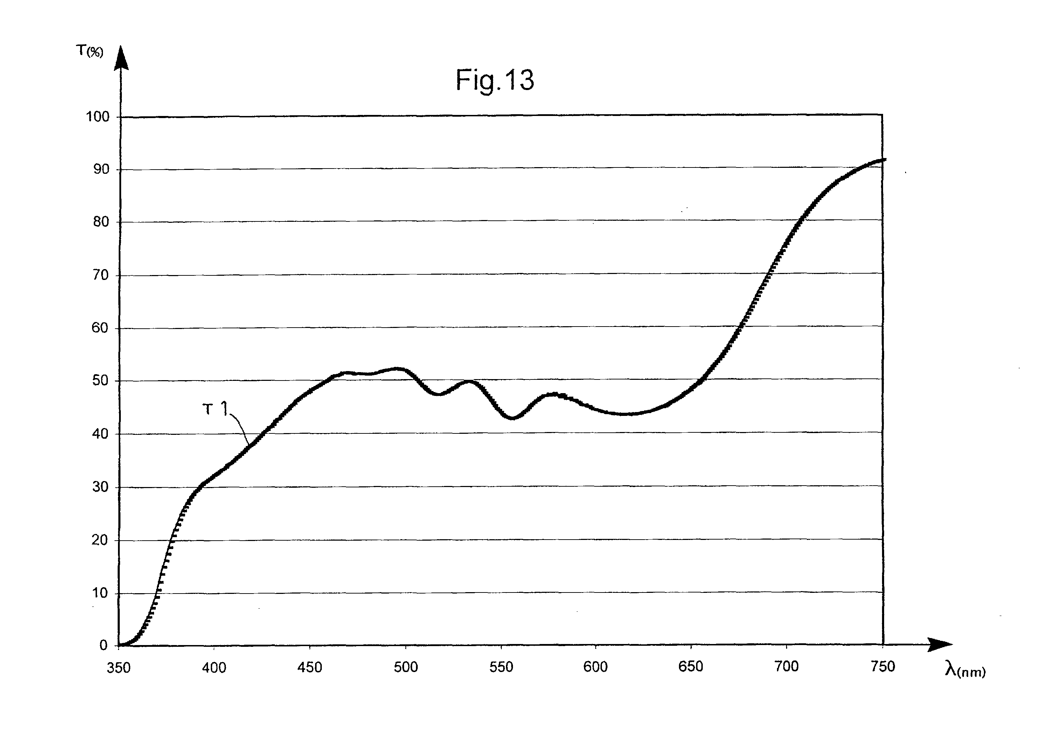

Les distributions spectrales des facteurs de transmission des couleurs GRIS, VERT et BRUN sont représentées respectivement sur les graphiques des figures 13, 14 et 15.

Les valeurs des écarts chromatiques moyens $\Delta E_m^*$ des couleurs GRIS, VERT et BRUN pour la déviation colorimétrique engendrée sur une palette test de 127 échantillons définie selon le premier mode de réalisation décrit ci-dessus, sont respectivement égales à 0,58945, à 2,4204 et à 3,4606.

La valeur test $\Delta E_o$ étant choisie égale à 5, l'on constate que les valeurs de ces écarts chromatiques moyens sont tous inférieurs à la valeur test, les couleurs GRIS, VERT et BRUN étant acceptées.

Si, en variante, la valeur test $\Delta E_o$ est choisie inférieure à 5, par exemple égale à 0,5, il y a lieu de mesurer la distribution angulaire correspondant à chacune de ces couleurs.

Calculés tel que précédemment défini, pour l'axe a* de l'espace CIELAB, les écarts types des couleurs GRIS, VERT et BRUN sont respectivement égaux à 51,454°, 40,622° et 36,901°, et donc tous inférieurs à 55°. La distribution angulaire est donc uniforme pour chacune de ces couleurs.

**Revendications**

1. Procédé pour l'obtention d'une gamme de couleurs, ce procédé comportant les étapes suivantes :

   - sélection d'une couleur (C) dite test parmi un éventail de couleurs prédéterminé ;
   - sélection d'une palette test (P) constituée d'une pluralité d'échantillons (E1, E2, E3) de couleurs ;
   - mesure de la couleur (C1, C2, C3), dite réelle, de chaque échantillon (E1, E2, E3), ainsi que du blanc parfait s'il ne fait pas partie de la palette test (P), éclairé par une source de lumière blanche (S) ;
   - mesure de la couleur (C'1, C'2, C'3), dite apparente, de chaque échantillon (E1, E2, E3), ainsi que du blanc parfait s'il ne fait pas partie de la palette test (P), éclairé par une source (SF) dite test, formée par ladite source de lumière blanche filtrée par ladite couleur test ;
   - mesure, pour chaque échantillon (E1, E2, E3), de la déviation colorimétrique entre ladite couleur réelle (C1, C2, C3) mesurée et ladite couleur apparente (C'1, C'2, C'3) mesurée ;
   - mesure, pour le blanc parfait s'il ne fait pas partie de la palette test (P), de la déviation colorimétrique entre ladite couleur réelle mesurée et ladite couleur apparente mesurée ;
   - correction, pour chaque échantillon (E1, E2, E3), de la déviation colorimétrique mesurée, par soustraction de la déviation colorimétrique mesurée pour le blanc parfait, afin de compenser l'adaptation chromatique ;
   - mesure de l'écart chromatique donné par la déviation colorimétrique corrigée de chaque échantillon (E1, E2, E3) ;
   - mesure de l'écart chromatique moyen pour l'ensemble des écarts chromatiques ;
   - comparaison de la valeur de l'écart chromatique moyen à une valeur test ;
   - ajout de la couleur test (C) à la gamme si la valeur de l'écart chromatique moyen est inférieure ou égale à ladite valeur test.

2. Procédé selon la revendication 1, **caractérisé en ce que** ladite couleur test (C) est ajoutée à la gamme si, et seulement si chaque écart chromatique est inférieur ou égal à ladite valeur test.

3. Procédé selon la revendication 1, **caractérisé en ce qu'**il comporte les étapes suivantes si au moins l'un des écarts chromatiques est strictement supérieur à ladite valeur test :

   - mesure de la distribution angulaire des déviations colorimétriques, c'est-à-dire l'ensemble des angles de déviation donnés chacun par la déviation colorimétrique corrigée d'un échantillon respectif (E1, E2, E3) ;
   - ajout de la couleur test à la gamme si ladite distribution angulaire est uniforme.

4. Procédé selon l'une des revendications 1 à 3, **caractérisé en ce que** ledit éventail est constitué par l'atlas de Munsell.

5. Procédé selon l'une des revendications 1 à 4, **caractérisé en ce que** ladite palette test (P) est constituée par une pluralité d'échantillons (E1, E2, E3) de couleurs choisies parmi l'atlas de Munsell.

6. Procédé selon l'une des revendications 1 à 4, **caractérisé en ce que** la palette test (P) est constituée par une pluralité d'échantillons (E1, E2, E3) dont les couleurs sont sélectionnées comme étant les plus représentatives de l'atlas de Munsell selon une compression effectuée par une méthode prédéterminée.

7. Procédé selon la revendication 6, **caractérisé en ce que** ladite méthode prédéterminée est une réduction par analyse en composantes principales.

8. Procédé selon l'une des revendications 1 à 7, **caractérisé en ce que** la mesure de la couleur apparente et de la couleur réelle consiste à calculer leurs coordonnées dans un espace chromatique prédéterminé.

9. Procédé selon la revendication 8, **caractérisé en ce que** l'espace chromatique est l'espace CIELAB.

10. Procédé pour l'obtention d'un verre ophtalmique de couleur, **caractérisé en ce qu'**il comporte une étape d'obtention d'une gamme de couleurs par le procédé suivant l'une des revendications 1 à 9, constituée par un ensemble de couleurs dont le nombre est strictement supérieur à deux, et une étape de sélection d'une couleur parmi la gamme ainsi obtenue.

**Claims**

1.  A method of obtaining a range of colours, this method including the following steps:

    -   selecting a test colour (C) from a predetermined set of colours,
    -   selecting a test palette (P) comprising a plurality of colour samples (E1, E2, E3),
    -   measuring the real colour (C1, C2, C3) of each sample (E1, E2, E3), as well as the perfect white if it is not part of the test palette (P), illuminated by a source (S) of white light;
    -   measuring the apparent colour (C'1, C'2, C'3) of each sample (E1, E2, E3) as well as the perfect white if it is not part of the test palette (P), illuminated by a test source (SF) formed by said source of white light filtered by said test colour;
    -   measuring for each sample (E1, E2, E3) the colorimetric deviation between said measured real colour (C1, C2, C3) and said measured apparent colour (C'1, C'2, C'3);
    -   measuring, for the perfect white if it is not part of the test palette (P), the colorimetric deviation between said measured real colour and said measured apparent colour;
    -   correcting, for each sample (E1, E2, E3) the measured colorimetric deviation by subtracting the colorimetric deviation measured for the perfect white to compensate the chromatic adaptation;
    -   measuring the chromatic error given by the corrected colorimetric deviation of each sample (E1, E2, E3);
    -   measuring the mean chromatic error for all the chromatic errors,
    -   comparing the value of the mean chromatic error to a test value, and
    -   adding the test colour (C) to the range if the value of the mean chromatic error is less than or equal to said test value.

2.  A method according to claim 1 **characterized in that** said test colour (C) is added to the range if and only if each chromatic error is less than or equal to said test value.

3.  A method according to claim 1, **characterized in that** it includes the following steps if at least one chromatic error is strictly greater than said test value:

    -   measuring the angular distribution of the colorimetric deviations i.e. all of the deviation angles each given by the corrected colorimetric deviation of a respective sample (E1, E2, E3);
    -   adding the test colour to the range if said angular distribution is uniform.

4.  A method according to any of claims 1 to 3 **characterized in that** said set comprises the Munsell atlas.

5.  A method according to any of claims 1 to 4 **characterized in that** said test palette (P) comprises a plurality of colour samples (E1, E2, E3) chosen from the Munsell atlas.

6.  A method according to any of claims 1 to 4 **characterized in that** the test palette (P) comprises a plurality of samples (E1, E2, E3) whose colours are selected as being the most representative of the Munsell atlas according to a compression carried out by a predetermined method.

7.  A method according to claim 6 **characterized in that** said predetermined method is a reduction by analysis into main components.

8.  A method according to any of claims 1 to 7 **characterized in that** the apparent colour and the real colour are measured by calculating their coordinates in a predetermined chromatic space.

9.  A method according to claim 8 **characterized in that** the chromatic space is the CIELAB space.

10. A method of obtaining a coloured ophthalmic lens, **characterized in that** it includes a step of obtaining a range of colours by the method according to any of claims 1 to 9, consisting of a set of more than two colours and a step of selecting a colour from the resulting range.

**Patentansprüche**

1.  Verfahren zur Erlangung einer Farbskala, umfassend folgende Schritte:

- Auswahl einer sogenannten Testfarbe (C) aus einem Fächer von vorbestimmten Farben;
- Auswahl einer Testpalette (P), zusammengestellt aus einer Vielzahl von Farbproben (E1, E2, E3);
- Messung der sogenannten echten Farbe (C1, C2, C3) von jeder Probe (E1, E2, E3), sowie von perfektem Weiß, falls es nicht zur Testpalette (P) gehört, beleuchtet von einer Weißlichtquelle (S);
- Messung der sogenannten scheinbaren Farbe (C'1, C'2, C'3) von jeder Probe (E1, E2, E3), sowie vom perfekten Weiß, falls es nicht zur Testpalette (P) gehört, beleuchtet von einer sogenannten Testquelle (SF), gebildet aus der durch die Testfarbe gefilterten Weißlichtquelle;
- für jede Probe (E1, E2, E3) Messung der farbmetrischen Abweichung zwischen der gemessenen echten Farbe (C1, C2, C3) und der gemessenen scheinbaren Farbe (C'1, C'2, C'3);
- für das perfekte Weiß, falls es nicht zur Testpalette (P) gehört, Messung der farbmetrischen Abweichung zwischen der gemessenen echten Farbe und der gemessenen scheinbaren Farbe;
- für jede Probe (E1, E2, E3) Korrektur der gemessenen farbmetrischen Abweichung durch Subtraktion der gemessenen farbmetrischen Abweichung für das perfekte Weiß, um die chromatische Anpassung zu kompensieren;
- Messung des chromatischen Abstands, der sich durch die korrigierte farbmetrische Abweichung von jeder Probe (E1, E2, E3) ergibt;
- Messung des mittleren chromatischen Abstands für die Gruppe der chromatischen Abstände;
- Vergleich des Werts für den mittleren chromatischen Abstand mit einem Testwert;
- Hinzufügen der Testfarbe (C) zur Skala, falls der mittlere chromatische Abstand kleiner oder gleich dem Testwert ist.

2. Verfahren nach Anspruch 1, **dadurch gekennzeichnet, dass** die Testfarbe (C) dann, und nur dann, der Skala hinzugefügt wird, wenn jeder chromatische Abstand kleiner oder gleich dem Testwert ist.

3. Verfahren nach Anspruch 1, **dadurch gekennzeichnet, dass** es folgende Schritte umfasst, wenn wenigstens einer der chromatischen Abstände echt größer als der Testwert ist:

- Messung der Winkelverteilung der farbmetrischen Abweichungen, d.h. die Gruppe der Abweichungswinkel, die sich jeweils durch die korrigierte farbmetrische Abweichung einer jeweiligen Probe (E1, E2, E3) ergeben;
- Hinzufügen der Testfarbe zur Skala (wenn die Winkelverteilung uniform ist).

4. Verfahren nach einem der Ansprüche 1 bis 3, **dadurch gekennzeichnet, dass** der Fächer aus dem Munsellatlas gewählt wird.

5. Verfahren nach einem der Ansprüche 1 bis 4, **dadurch gekennzeichnet, dass** die Testpalette (P) aus einer Vielzahl von Proben (E1, E2, E3) von aus dem Munsellatlas ausgewählten Farben zusammengestellt ist.

6. Verfahren nach einem der Ansprüche 1 bis 4, **dadurch gekennzeichnet, dass** die Testpalette (P) eine Vielzahl von Proben (E1, E2, E3) umfasst, deren Farbe als am repräsentativsten des Munsellatlas gemäß einer durch eine vorbestimmte Methode ausgeführten Kompression ausgewählt wurden.

7. Verfahren nach Anspruch 6, **dadurch gekennzeichnet, dass** die vorbestimmte Methode eine Reduktion durch Prinzipalbestandteilanalyse ist.

8. Verfahren nach einem der Ansprüche 1 bis 7, **dadurch gekennzeichnet, dass** die Messung der scheinbaren Farbe und der echten Farbe darin besteht, ihre Koordinaten in einem vorbestimmten chromatischen Raum zu berechnen.

9. Verfahren nach Anspruch 8, **dadurch gekennzeichnet, dass** der chromatische Raum der CIELAB-Raum ist.

10. Verfahren zur Erlangung eines ophtalmischen Farbglases, **dadurch gekennzeichnet, dass** es einen Schritt zur Erlangung einer Farbskala durch das Verfahren nach einem der Ansprüche 1 bis 9, wobei die Farbskala aus einer Gruppe von Farben zusammengesetzt ist, deren Anzahl echt größer als 2 ist, und einen Schritt der Auswahl einer der Farben aus der so erlangten Skala umfasst.

Fig.1

Fig.2

Fig.3

Fig.4

Fig.5

Fig.6

## Fig.7

TEINTE

VERT    JAUNE

BLEU    ORANGE

GRIS

POURPRE    ROUGE

BLANC

NOIR

LUMINOSITE

SATURATION

## Fig.8

R

0.4

0.3

0.2

0.1

0

350  400  450  500  550  600  650  700  750  800    λ

Fig.9

Fig.10

Fig.11

Fig.12

Fig.13

Fig.14

EP 1 273 894 B1

Fig.15

EP 1 273 894 B1